# EUROPEAN PATENT SPECIFICATION

(11) **EP 2 211 265 B1**
(45) Date of publication and mention of the grant of the patent: **30.11.2011**
(21) Application number: 10150589.9
(22) Date of filing: 12.01.2010
(51) Int. Cl.: G06F 7/72

(54) **Elliptic curve arithmetic processing unit and elliptic curve arithmetic processing program and method**
Verarbeitungseinheit, Programm und Verfahren für elliptische Kurven Arithmetik
Unité de traitement arithmétique, programme et procédé d'opération arithmétique a courbe elliptique

(30) Priority: 19.01.2009 JP 2009009091
(43) Date of publication of application: 28.07.2010
(73) Proprietor: Fujitsu Limited, Kawasaki-shi, Kanagawa 211-8588 (JP)
(72) Inventor: Itoh, Kouichi, Kawasaki-shi Kanagawa 211-8588 (JP); Yamamoto, Dai, Kawasaki-shi Kanagawa 211-8588 (JP); Izu, Tetsuya, Kawasaki-shi Kanagawa 211-8588 (JP); Takenaka, Masahiko, Kawasaki-shi Kanagawa 211-8588 (JP); Furukawa, Kazuyoshi, Kawasaki-shi Kanagawa 211-8588 (JP)
(74) Representative: Wilding, Frances Ward

(56) References cited:
- GOUBIN L: "A Refined Power-Analysis Attack on Elliptic Curve Cryptography" LECTURE NOTES IN COMPUTER SCIENCE, SPRINGER VERLAG, DE, vol. 2567/2002, 1 July 2003 (2003-07-01), pages 199-211, XP002470384 ISSN: 0302-9743
- MOELLER ET AL: "SECURING ELLIPTIC CURVE POINT MULTIPLICATION AGAINST SIDE-CHANNEL ATTACKS" INFORMATION SECURITY. INTERNATIONAL CONFERENCE: PROCEEDINGS ISC, XX, XX, 1 October 2001 (2001-10-01), pages 324-334, XP001068194
- CERTICOM RESEARCH: "Standards for Efficient Cryptography, SEC 1: Elliptic Curve Cryptography" INTERNET CITATION 1 September 2000 (2000-09-01), XP003011889 Retrieved from the Internet: URL:http://www.secg.org/download/aid-385/s ec1_final.pdf> [retrieved on 2007-01-01]
- ANSARI B ET AL: "High-Performance Architecture of Elliptic Curve Scalar Multiplication" IEEE TRANSACTIONS ON COMPUTERS, IEEE SERVICE CENTER, LOS ALAMITOS, CA, US, vol. 57, no. 11, 1 November 2008 (2008-11-01), pages 1443-1453, XP011233075 ISSN: 0018-9340
- IZU T ET AL: "IMPROVED ELLIPTIC CURVE MULTIPLICATION METHODS RESISTANT AGAINST SIDE CHANNEL ATTACKS" PROGRESS IN CRYPTOLOGY-INDOCRYPT. INTERNATIONAL CONFERENCE INCRYPTOLOGY IN INDIA. PROCEEDINGS, XX, XX, 16 December 2002 (2002-12-16), pages 296-313, XP001160564

## Description

### FIELD

The embodiments discussed herein are related to an information security technique.

### BACKGROUND

Along with advancement of the information society, it is to be anticipated that services using an information network such as an electronic payment or resident registry network become widely available. An information security technique is indispensable to safely deliver such services. In addition, a public key cryptosystem is used as the basic technique for the information security. RSA and elliptic curve cryptosystem (hereinafter referred to as ECC: Elliptic Curve Cryptosystem) are known as major public key cryptosystems. The use of these cryptosystems makes it possible to realize information encryption, digital signature, and an authentication function, and to prevent the unauthorized third person from accessing personal information.

Further, a smart card is known as a device of an end user of the above services. The smart card is a card with a built-in IC chip. Confidential information about a user is stored in a memory area in the IC chip of the smart card. Further, the IC chip of the smart card is furnished with an encryption function, a digital signature function, and an authentication function. The confidential information about a user is used as a key to the processing of these functions. Since the confidential information is stored in the internal memory of the card, the card ensures higher level of security against unauthorized access by the third party, i.e., tamper-proofing than a magnetic recording card.

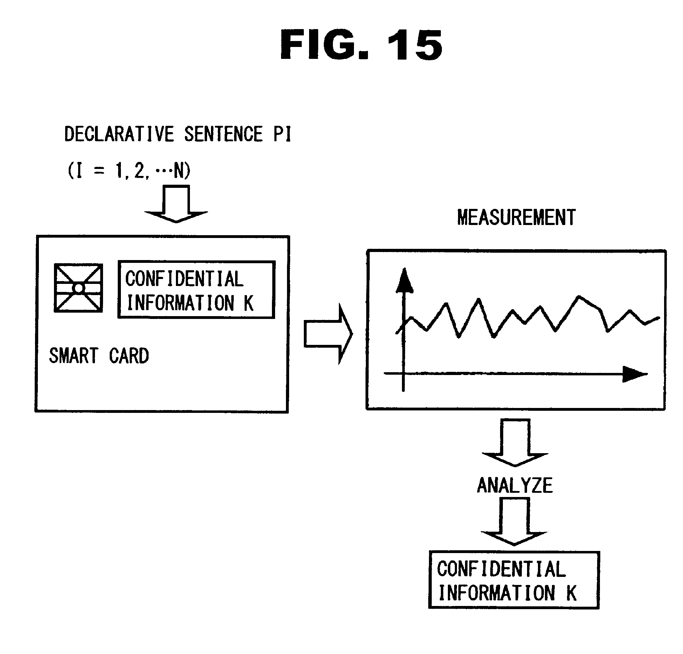

To describe analyses of such a smart card, however, power analysis attack (Power Analysis; hereinafter referred to as PA) is known. For example, non-patent document of P. Kocher, J, Jaffe and B. Jun "Differential Power Analysis", Crypto' 99, LNCS 1666, pp. 388-397, Springer-Verlag, 1999 discloses power analysis attack. The outline of the PA will be described below with reference to the drawings. Fig. 15 illustrates the outline of the PA.

As illustrated in Fig. 15, the PA is a method for measuring how much a smart card consumes power during processing executed using an encryption function with user's confidential information K used as a key (hereinafter cryptographic processing) to estimate and analyze the confidential information K using the measured data. The PA is an attack aimed at analysis based on observation of a power change, so a target of attack is not limited to the smart card. For example, there is known another PA that measures an amount of electromagnetic waves generated during power consumption in a PDA device. For example, non-patent document of Catherine H. Gebotys, Simon ho, and C. C. Tiu, "EM Analysis of Rijndael and ECC on a Wireless Java-Based PDA", Cryptographic Hardware and Embedded System, CHES 2005, pp. 250-264, LNCS 3659 discloses the another PA. In other words, the PA targets all built-in devices that would consume a power.

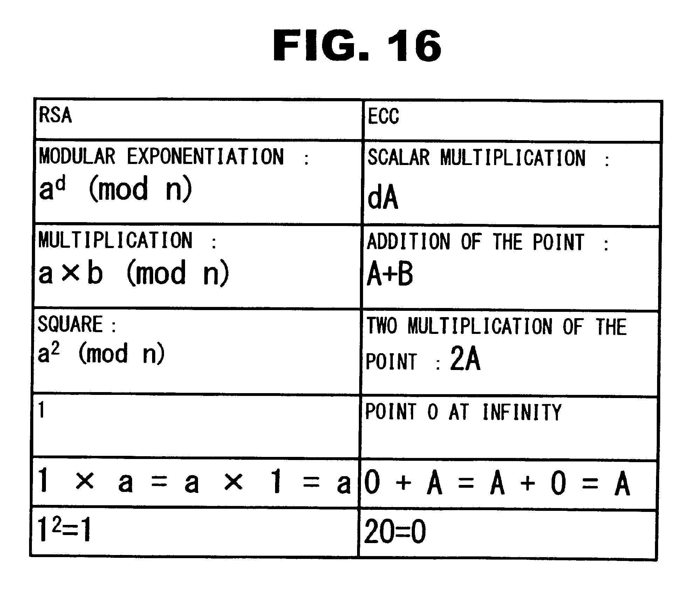

Next, PA against built-in devices using RSA and ECC is described in detail. Since the PA is an attack utilizing the mechanism of arithmetic operations of RSA and ECC, the arithmetic calculation thereof is described first. Fig. 16 illustrates a correspondence relationship between the arithmetic calculation of the RSA and the arithmetic calculation of the ECC.

The RSA and the ECC have a correspondence relationship as illustrated in Fig. 16. Based on the correspondence relationship, the RSA calculation and the ECC calculation are described below.

The arithmetic calculation of the RSA is described first. According to the RSA, processing is performed based on modular exponentiation. The modular exponentiation is calculation for finding z = a^{x}(mod n) based on radix a, exponent x, and modulo n. In the RSA, processing is performed with x used as confidential information through the modular exponentiation. For example, processing for decoding a text coded by RSA is to find m satisfying the condition of m = c^{d}(mod n) where c represents the code text and d represents a private key. As for electronic signature based on RSA, the above calculation is performed on target data c, a private key d, and modulo n to obtain electronic signature m. In either processing, the third person who does not know the private key d maynot obtain correct decoding result and electronic signature.

Next, the arithmetic calculation of the ECC is described. In the ECC, the following relation between x and y is referred to as elliptic curve. The elliptic curve is composed of two elements, prime field (prime field) and binary field (binary field). In addition, parameters a and b for uniquely determining the elliptic curve are referred to as elliptic curve parameters. The elliptic curve (prime field) is expressed by y² = x³ + ax + b(mod p) where p represents the prime number. In this expression, p is the prime number, 0 ≤ a, and b < p. Further, the elliptic curve (binary field) is expressed by y² + xy = x³ + ax² + b(mod f(x)). In this expression, f is a polynomial in GF(2^{m}), and a, b ⊆ GF(2^{m}). Further, (x, y) satisfying the relation representing the elliptic curve (prime field) and the elliptic curve (binary field) is referred to as an elliptic point (elliptic point).

In the ECC, processing is performed based on elliptic scalar multiplication (Elliptic Scalar Multiplication). The elliptic scalar multiplication is arithmetic calculation to find a point V on the elliptic curve satisfying V = sA with an integer s called a scalar value. For example, ECDH key exchange in the ECC finds a point V on the elliptic curve satisfying V = dA where A represents a point on the elliptic curve as a public key of the other end, and d represents a private key. In this way, key sharing is safely realized. The third person who does not know a value of the private key d may not obtain a correct value of a shared key.

In the above RSA encryption, electronic signature using RSA, and ECC encryption, a value of a private key d does must not be leaked to the third person who tries to attack encrypted data (hereinafter referred to as an attacker). In short, it is a tamper-proof function to protect a value of d in the RSA and the ECC. From the mathematical point of view, as is known, even if values other than d leak to an attacker, a calculation amount to derive a value of d from these values and thus, the value of d may not be easily obtained within a realistic time range. For example, it is known that upon decoding RSA-encrypted data, if n is 1024 bit or more, an attacker may not easily obtain a value of d even if the attacker knows values of c, n, and m. In addition, it is known that upon decoding data encrypted by ECC, if an elliptic curve parameter is 160 bit or more, an attacker may not easily obtain a value of d even if the attacker knows values of A and V.

As described above, it is known that, although a value of a private key d may not be easily obtained from the mathematical point of view in the RSA and the ECC, the value can be easily revealed when using PA. The fundamental mechanism of the PA is considerably related to the modular exponentiation and scalar multiplication in the ECC. Accordingly, procedures for arithmetic calculation thereof are described prior to explanation about the PA against the RSA and the PA against the ECC.

First, the arithmetic calculation procedure for the modular exponentiation in the RSA and the PA against the RSA are described. Fig. 17 illustrates an algorithm of modular exponentiation based on a binary method. Fig. 18 schematically illustrates modular exponentiation based on a binary method. Fig. 19 schematically illustrates PA against modular exponentiation based on a binary method.

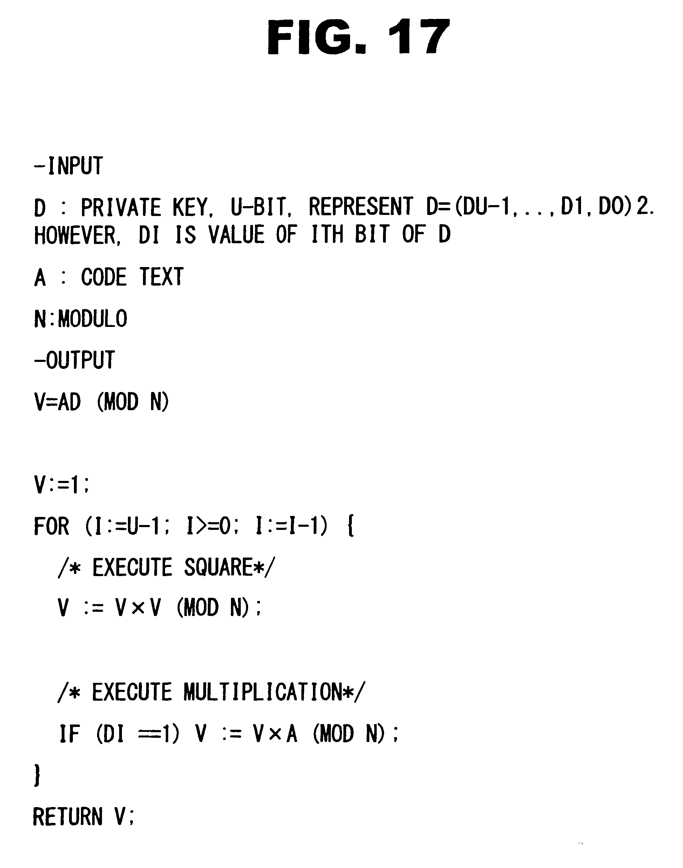

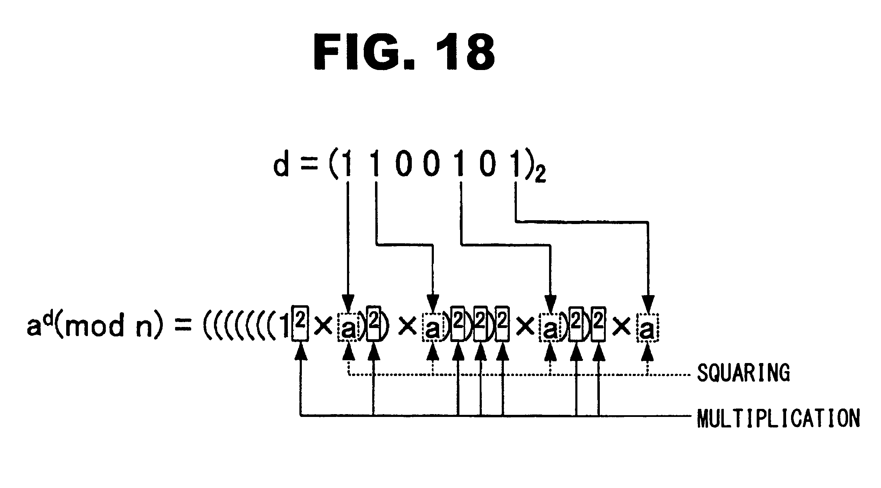

As for the modular exponentiation in the RSA (RSA encryption and electronic signature based on RSA), if lengths of all of n, c, and d are 1024 bit or more, in the case of performing modular exponentiation following mathematical expression, multiplication may be performed with (mod n) d times. This arithmetic calculation requires a calculation amount of 2¹⁰²⁴ or more and thus is unrealistic. To that end, a binary method is known as a calculation method for reducing the calculation amount to log₂d= 1024. Hereinbelow, the binary method applied to modular exponentiation is described. According to the binary method, as illustrated in Fig. 17, if a u-bit private key d is represented by d = dᵤ₋₁∥...∥d₁∥d₀ (where dᵢ corresponds to a 1-bit value), a bit value of dᵢ is scanned in the order from the higher-order bit to the lower-order bit (i.e., in the order from i = u-1 to i = 0). Then, arithmetic calculation is performed in accordance with a bit valve of dᵢ. Considering that dᵢ == 1, multiplication (v: = v x a(mod n) in Fig. 17) follows squaring (v: = v x v(mod n) in Fig. 17). On the other hand, considering that dᵢ == 0, only squaring is performed. To elaborate, an arithmetic calculation sequence of squaring and multiplication illustrated in Fig. 18 directly correlates to a bit value of dᵢ, and The PA against the RSA decodes d utilizing this characteristic.

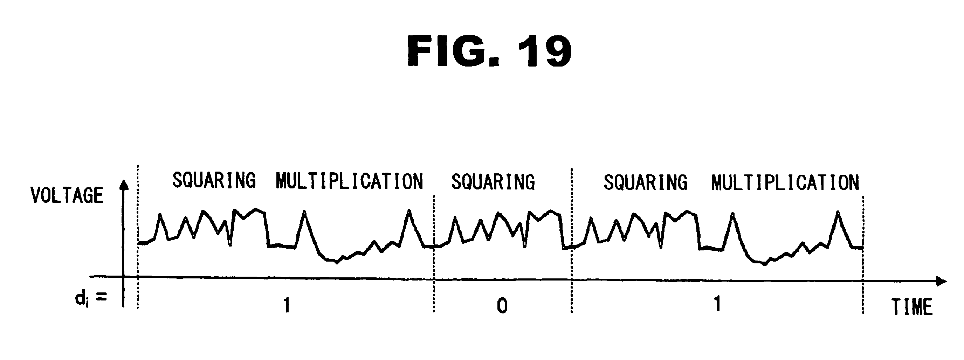

As illustrated in Fig. 19, the PA against the RSA reveals a private key d by measuring power consumption of a device that performs processing based on the binary method and distinguishing between power waveforms in multiplication and squaring. In the case where multiplication follows squaring, a bit value of d is revealed as 1. In the case of performing squaring alone, a bit value of d is revealed as 0. All bits of d are revealed in this way to thereby successfully perform PA against RSA.

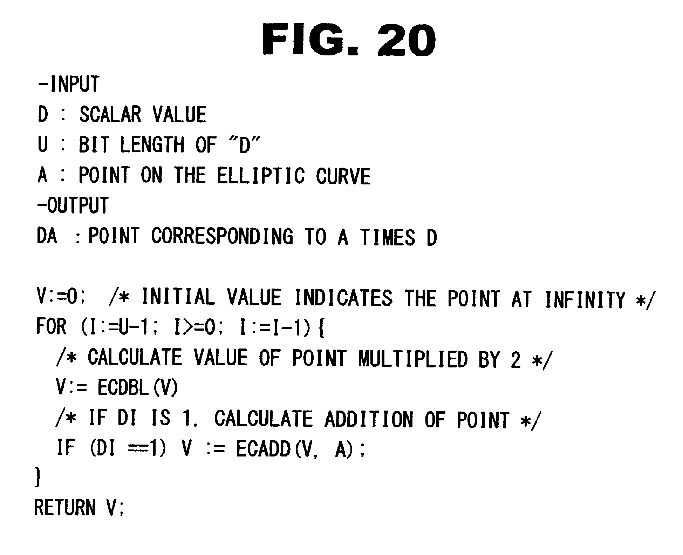

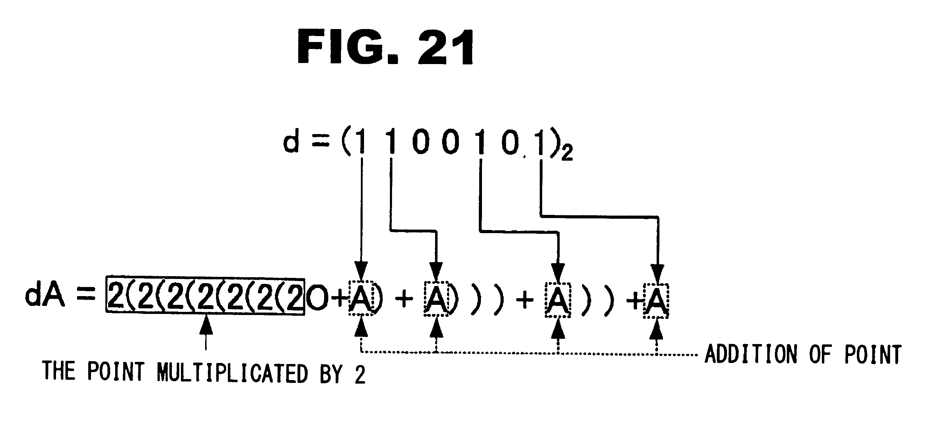

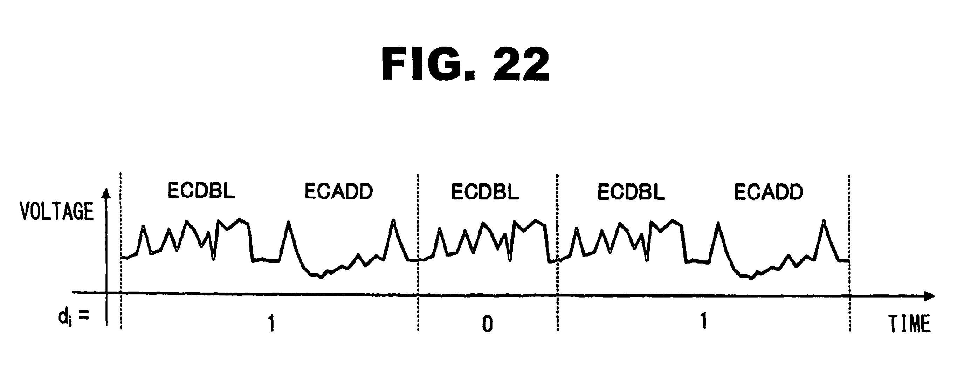

The arithmetic calculation procedure for point scalar multiplication in the ECC and PA against the ECC are described. Fig. 20 illustrates an algorithm of the point scalar multiplication based on a binary method. Fig. 21 schematically illustrates the point scalar multiplication based on a binary method. Fig. 22 schematically illustrates PA against the point scalar multiplication based on a binary method.

Similar to the modular exponentiation in the RSA, a binary method is also known as a calculation method for reducing a calculation amount thereof. Hereinbelow, the binary method for the scalar multiplication is described. According to the binary method, as illustrated in Fig. 20, if a u-bit private key d is represented by d = dᵤ₋₁∥...∥d₁∥d₀ (where dᵢ corresponds to a 1-bit value), a bit value of dᵢ is scanned in the order from the higher-order bit to the lower-order bit (i.e., in the order from i = u-1 to i = 0). Then, arithmetic calculation is performed in accordance with a bit valve of dᵢ. Considering that dᵢ == 1, addition of the point (V: = V + A in Fig. 20; hereinafter referred to as ECADD: Elliptic Curve Addition) 17) follows doubling of the point (V = 2V in Fig. 20; hereinafter referred to as ECDBL: Elliptic Curve Doubling). On the other hand, considering that dᵢ == 0, only ECDBL is performed. To elaborate, an arithmetic calculation sequence of ECDBL and ECADD illustrated in Fig. 20 directly correlates to a bit value of dᵢ, and The PA against the ECC reveals d utilizing this characteristic.

As illustrated in Fig. 22, the PA against the ECC reveals a private key d by measuring power consumption of a device that performs processing based on the binary method and distinguishing between power waveforms in ECDBL and ECADD. In the case where ECDBL follows ECADD, a bit value of d is revealed as 1. In the case of performing ECDBL alone, a bit value of d is revealed as 0. All bits of d are revealed in this way to thereby successfully perform PA against ECC.

The PA against the RSA and the PA against the ECC determine the type of processing for determining a bit value of d based on a power waveform of a consumed power in a device for performing the processing to thereby reveal a private key d. Here, as a measure against the above PA, Add-and-double-always method (hereinafter referred to as A&D method) is known. For example, non-patent document of Jean-Sebastien Coron, "Resistance against Differential Power Analysis for Elliptic Curve Cryptosystems", Cryptographic Hardware and Embedded System, CHES 1999, pp. 2920392, LNCS 1717 discloses the A&D method. Hereinbelow, a measure against the PA against the RSA based on the A&D method and a measure against the PA against the RSA based on the A&D method are described.

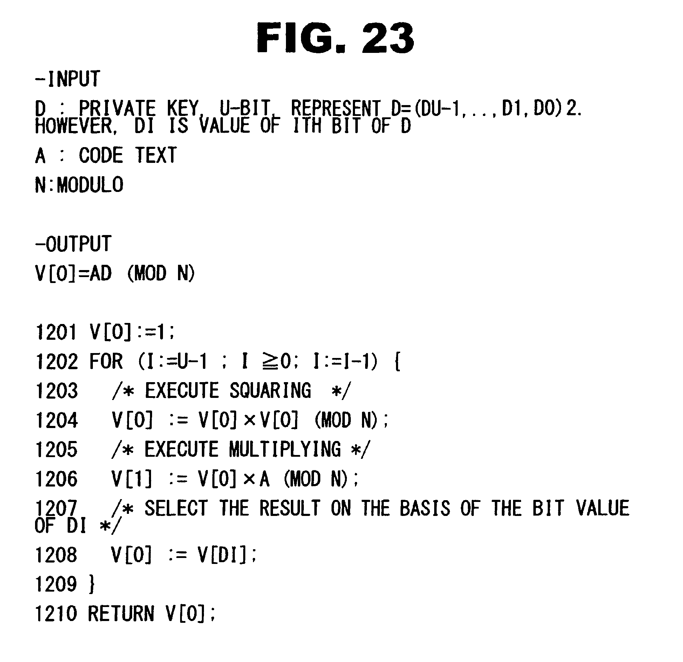

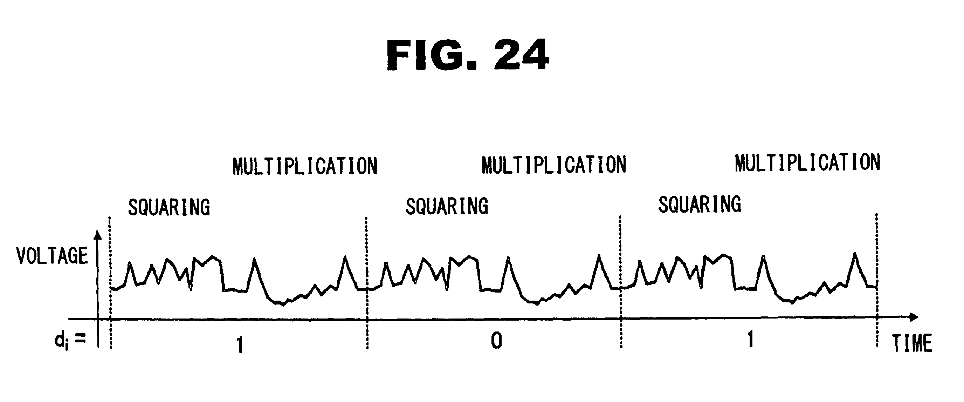

First, the measure against the PA to the RSA based on the A&D method is described. Fig. 23 illustrates an algorithm of modulo exponentiation based on the binary method in accordance with the A&D method. Fig. 24 schematically illustrates the PA against modulo exponentiation based on the binary method in accordance with the A&D method.

As illustrated in Fig. 23, modular exponentiation using the A&D method is performed while a calculation result is stored constantly in v[0]. Further, in the processing in 1206, even if a bit value dᵢ of d is 0, multiplication is performed. The multiplication result in v[1] is stored in v[0] upon the processing in 1208 if dᵢ = 1 and used in the next loop. On the other hand, if dᵢ = 0, the multiplication result v[1] in the processing in 1206 is not stored in v[0]. Instead, the squaring result v[0] in the processing of 1204 is stored in v[0] instead and used in the next loop if dᵢ=0. In other words, although the multiplication in the processing in 1206 is performed regardless of a value of dᵢ, the calculation result thereof is used for calculation in the next loop only when dᵢ = 1. According to such processing, as illustrated in Fig. 24, a power waveform of consumed power in the device for performing modular exponentiation based on the binary method is kept constant regardless of a value of di. This makes it possible to prevent the PA utilizing a difference between power waveforms in multiplication and squaring. Further, since the multiplication result is used in the next loop only when dᵢ = 1, consistency of modular exponentiation is kept.

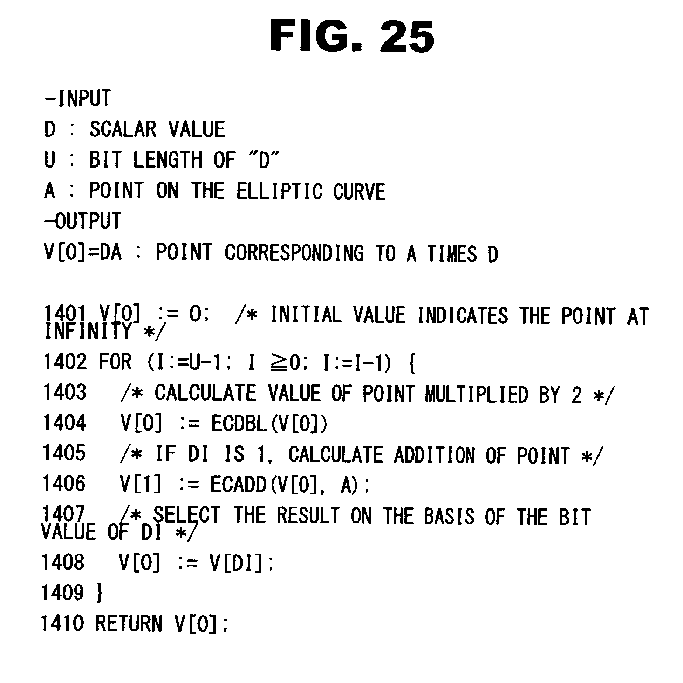

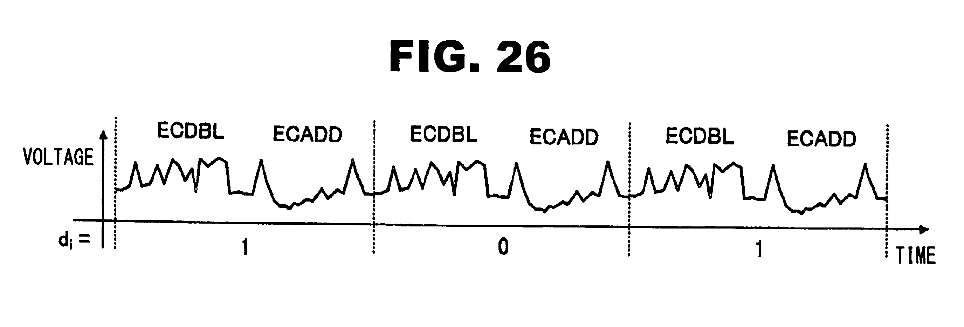

Next, the measure against the PA to the ECC based on the A&D method is described. Fig. 25 illustrates an algorithm of the point scalar multiplication based on the binary method in accordance with the A&D method. Fig. 26 schematically illustrates PA against the point scalar multiplication based on the binary method in accordance with the A&D method.

As illustrated in Fig. 25, the point scalar multiplication using the A&D method based on the binary method is performed while a calculation result is stored constantly in V[0]. Further, in the processing of 1406, even if a bit value dᵢ of d is 0, ECADD is performed. In addition, in copying to V[0] according to a value in 1408, if dᵢ = 0, the ECDBL result V[0] in the processing in 1404 is stored in V[0]. Further, if dᵢ = 1, the ECADD result V[1] in the processing in 1406 is stored in V[0]. In this way, V[0] storing calculation results is used for calculation in the next loop. According to such processing, as illustrated in Fig. 26, a power waveform of consumed power in the device for performing point scalar multiplication based on the binary method is kept constant regardless of a value of dᵢ. This makes it possible to prevent the PA utilizing a difference between power waveforms in point doubling and ECADD.

However, chosen message PA is known as a higher-level attack to the measure against the PA based on the A&D method. For example, non-patent document of Sung-Ming Yen, Wei-Chih Lien, SangJae Moon, and JaeCheol Ha, " Power Analysis by Exploiting Chosen Message and Internal Collisions-Vulnerability of Checking Mechanism for RSA-Decryption", Mycrypt 2005, pp. 183-195, LNCS 3715 discloses a chosen message PA. Hereinbelow, the chosen message PA against the RSA and the chosen message PA against the ECC are described.

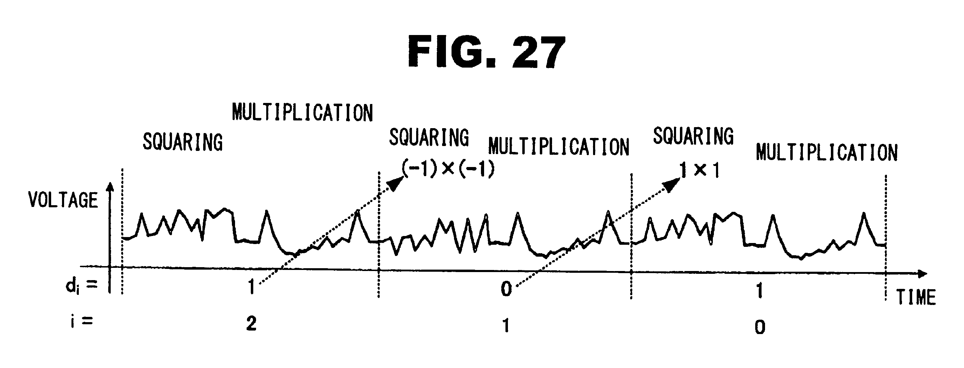

First, the chosen message PA against the RSA is described. Fig. 27 schematically illustrates the chosen message PA against the RSA.

The aforementioned PA against the RSA is an attack to input a random value a upon calculating a remainder a^{d}(mod n) of modulo exponentiation to measure a power waveform of consumed power in the processing and reveal a private key d. The chosen message PA against the RSA differs therefrom in that a special value is selected and input as a. According to this method, even the RSA using the A&D method is attacked successfully. More specifically, as illustrated in Fig. 27, a difference is produced in power waveform according to the value of dᵢ by inputting a = -1(mod n). By determining the value of dᵢ based on the difference in power waveform, the private key d can be decoded. Here, a correspondence relationship between the type of doubling (processing in 1204 in Fig. 23) with a loop variable i and a value of di is dᵢ₊₁ = 0 upon doubling of 1 x 1, and is dᵢ₊₁ = 1 upon doubling of (-1) x (-1). Here, the correspondence relationship follows the algorithm illustrated in Fig. 23. Provided that dᵢ = 0, the squaring result v[0](=(-1) x (-1) = 1) in the processing in 1204 is copied to v[0] through the processing in 1208. Thus, squaring of 1 x 1 is performed in the next loop. On the other hand, if dᵢ = 1, the squaring result v[1](=1 x (-1) = -1) in the processing in 1204 is copied to v[0] through the processing in 1208. Thus, squaring of (-1) x (-1) is performed in the next loop.

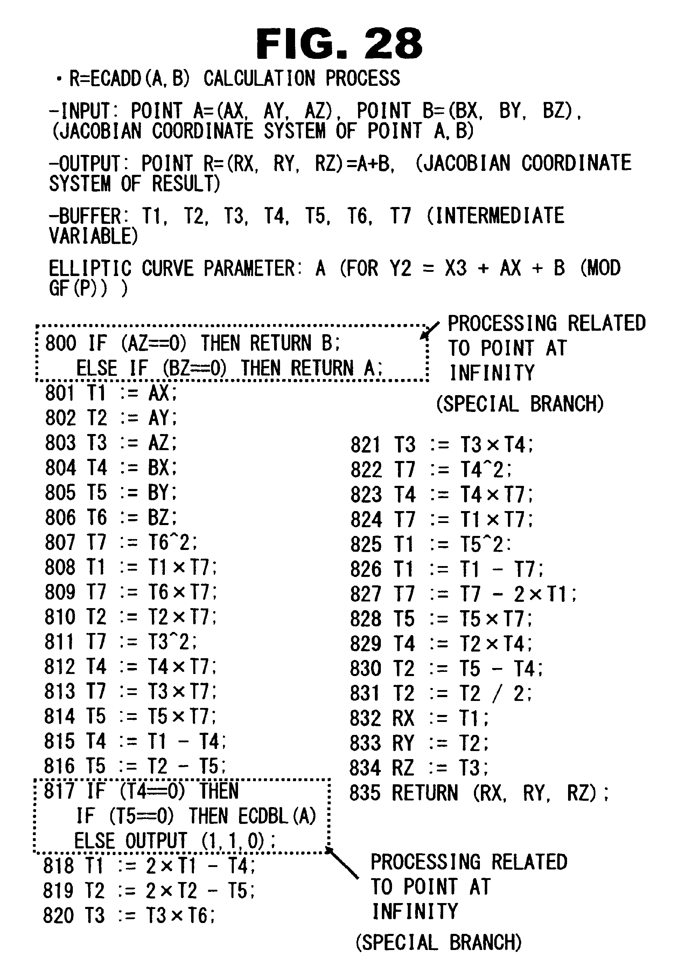

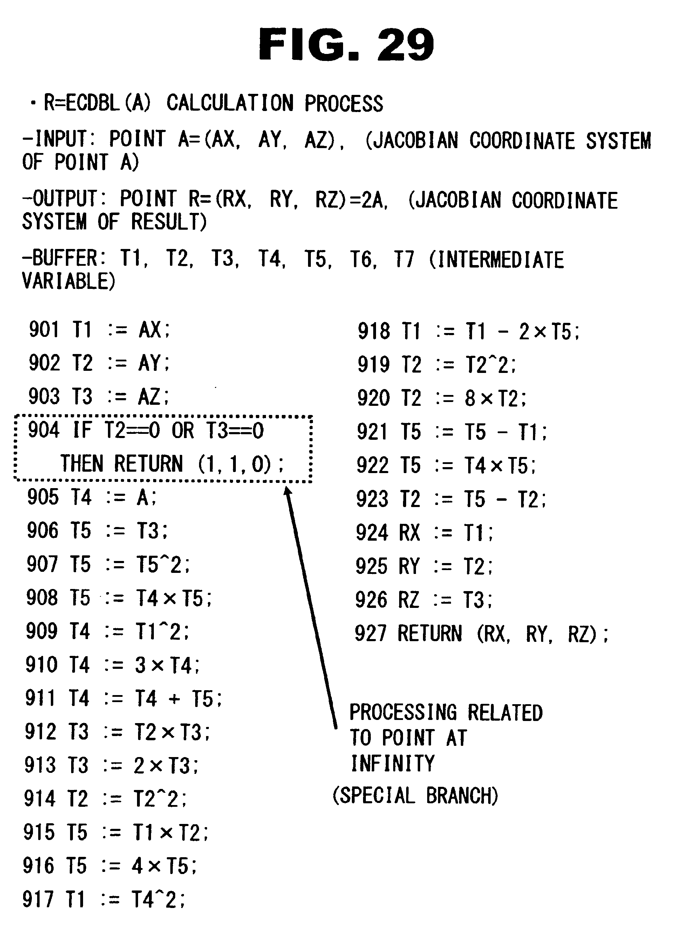

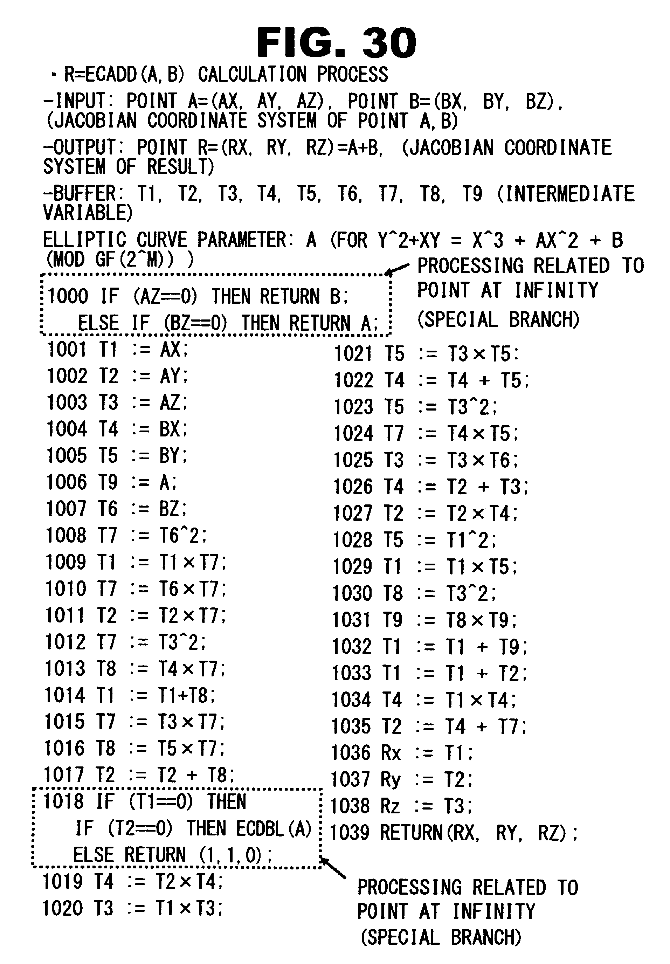

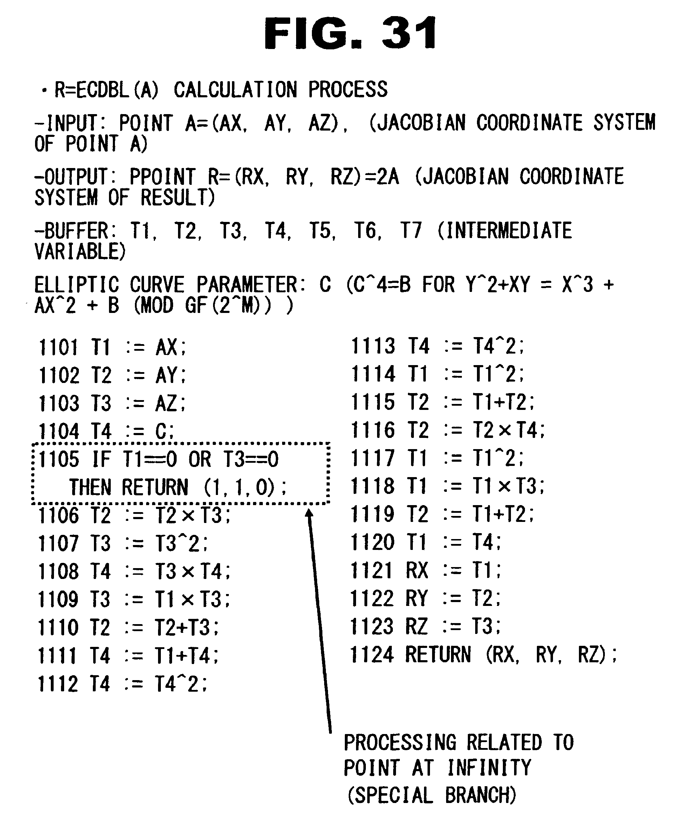

Subsequently, the chosen message PA against the ECC is described. Prior to a description about an attack to the aforementioned chosen message PA applied to the ECC, the point at infinity in the calculation procedure for point addition and point doubling based on the ECC is discussed. In the following description, the ECC is one utilizing the A&D method. Fig. 28 illustrates an algorithm of point addition of a prime field elliptic curve parameter. Fig. 29 illustrates an algorithm of point doubling of a prime field elliptic curve parameter. Fig. 30 illustrates an algorithm of point addition of a square elliptic curve parameter. Fig. 31 illustrates an algorithm of point doubling of a square elliptic curve parameter.

In the algorithm of the point addition or point doubling as illustrated in Figs. 28 to 31, coordinates of the point are represented in three dimensions like (X, Y, Z). Further, the point at infinity is represented with the Z coordinate set to 0, i.e., Z = 0. The point is as follows. That is, provided that the point at infinity is O, the point at infinity satisfies a relation of A+O=0+A=A with any point A. All the algorithms illustrated in Figs. 28 to 31 involve processing related to the point at infinity. This processing includes exception processing applied to the case where an input or output value is the point at infinity. Examples of the exception processing include processing in 800 and 817 in Fig. 28, processing in 904 in Fig. 29, processing in 1000 and 1018 in Fig. 30, and processing in 1105 in Fig. 31. Hereinbelow, branching applied to the case of performing exception processing is explained as special branching.

Upon calculation of A + B (B = ECDBL(V)) in the processing in 800 in Fig. 28 and the processing in 1000 in Fig. 30, a point B is output as a calculation result if a point A is the point at infinity (Az == 0). If the point B is the point at infinity (Bz == 0), i.e., the point A or point B is the point at infinity (special branch 1), a point not regarded as the point at infinity is output as a calculation result.

Further, if A == B upon the calculation of A + B (special branch 2), calculation of 2A (ECDBL(A)) is performed based on the calculation of A + B. Conceivable examples of the special branch 2 include the case where T₄ == 0 and T₅ == 0 in the processing in 817 in Fig. 28 or the case where T₁ == 0 and T₂ == 0 in the processing in 1018 in Fig. 30.

Further, if the calculation result is the point at infinity upon the calculation of A + B (special branch 3), coordinates (1, 1, 0) of the point at infinity are output as a calculation result. Conceivable examples of the special branch 3 include the case where T₄ == 0 and T₅≠ 0 in the processing in 817 in Fig. 28 or the case where T₁ == 0 and T₂≠ 0 in the processing in 1018 in Fig. 30.

Further, upon the calculation of 2A, if the point A as input data is the point at infinity, or 2A as output data is the point at infinity (special branch 4), coordinates (1, 1, 0) of the point at infinity are output as a calculation result. At the special branch 4, the case where the point A as input data is the point at infinity corresponds to the case where T₃ == 0 in the processing in 904 in Fig. 29 or in 1105 in Fig. 31. Further, the case where 2A as output data is the point at infinity corresponds to the case where T₂ == 0 in the processing in 904 in Fig. 29 or the case where T₁ == 0 in the processing in 1105 in Fig. 31.

Based on the above, the chosen message PA against the ECC is described. It is known that a point on the elliptic curve corresponding to a special value a = -1 in the above chosen message PA is a point A satisfying a relation of 2A = 0 and A (0. This is because a satisfying a relation of a = -1 is a value satisfying a relation of a² = 1 and a ≠ 1. Applying the value to arithmetic calculation of the elliptic curve gives 2A = 0 and A≠ 0. Further, in the chosen message PA against the ECC, A = P is used as input of point scalar multiplication. Here, the P is a point different from the point A. The point is such that a relation of 2P = 0 and P≠ 0 is satisfied, a Y coordinate is 0 if an elliptic curve parameter is a prime field, and an X coordinate is 0 if an elliptic curve parameter is square.

Considering that A = P is used as an input of scalar multiplication, 2P = 0 as a result of ECDBL calculation in the processing in 1404 illustrated in Fig. 25, and an even multiple point is always the point at infinity 0. Hence, a value stored in V[0] is always the point at infinity 0. In the case where the ECDBL calculation in the processing in 1404 is performed based on the algorithm illustrated in Fig. 29 (in the case where the arithmetic curve parameter is a prime field) or the algorithm illustrated in Fig. 31 (in the case where the elliptic curve parameter is square), coordinates (1, 1, 0) as the point at infinity is output as a calculation result by the special branch 4 to thereby complete the ECDBL calculation. To elaborate, if A = P is used as an input of point scalar multiplication, special branch appears and thus, the ECDBL calculation is terminated, and no main calculation is performed. Hence, a power waveform in the ECDBL calculation involving the special branch differs from a power waveform in the ECDBL calculation involving no special branch.

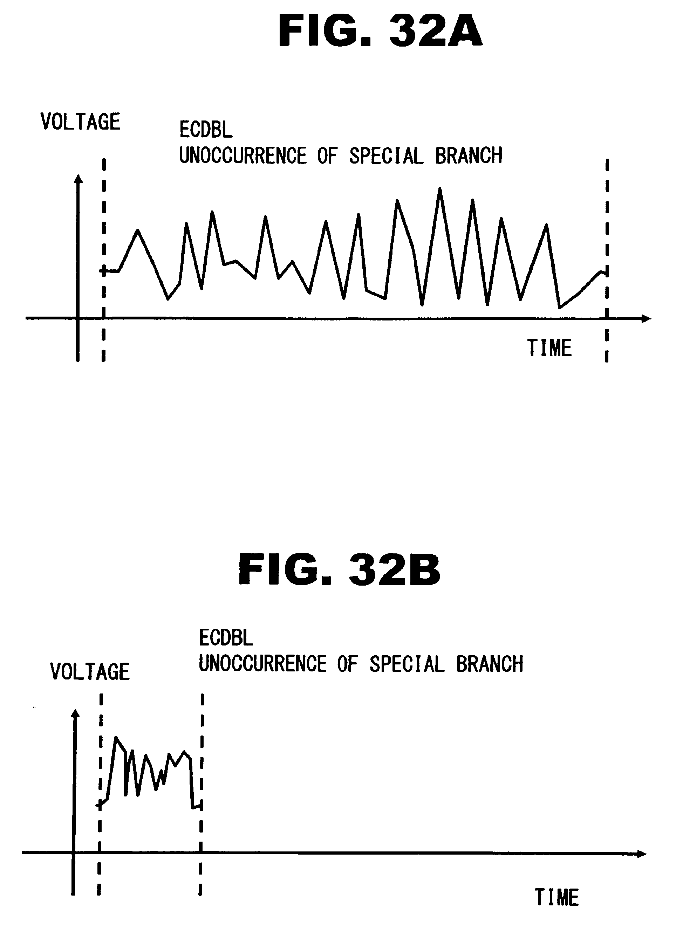

Fig. 32A and Fig. 32B illustrate a power waveform in the ECDBL calculation involving the special branch and a power waveform in the ECDBL calculation involving no special branch. As described above, the special branch interrupts the ECDBL calculation, as illustrated in Fig. 32A and Fig. 32B, a power wavelength thereof becomes shorter than that in the ECDBL calculation involving no special branch.

Further, if A = P is used as an input of point scalar multiplication, the point at infinity is stored in V[0] as a result of ECDBL calculation in the processing in 1404 illustrated in Fig. 25. Thus, in the processing in 1406 illustrated in Fig. 25, arithmetic calculation of ECADD(0, P) is continuously performed. In the case where one input of the ECADD calculation is the point at infinity, main calculation is not performed due to the special branch 1, and the ECADD calculation is terminated. To be specific, the ECADD calculation is terminated due to the special branch in the processing in 1000 illustrated in Fig. 30 and the special branch in the processing in 800 illustrated in Fig. 28. Hence, a power waveform in the ECADD calculation involving the special branch differs from a power waveform in the ECADD calculation involving no special branch.

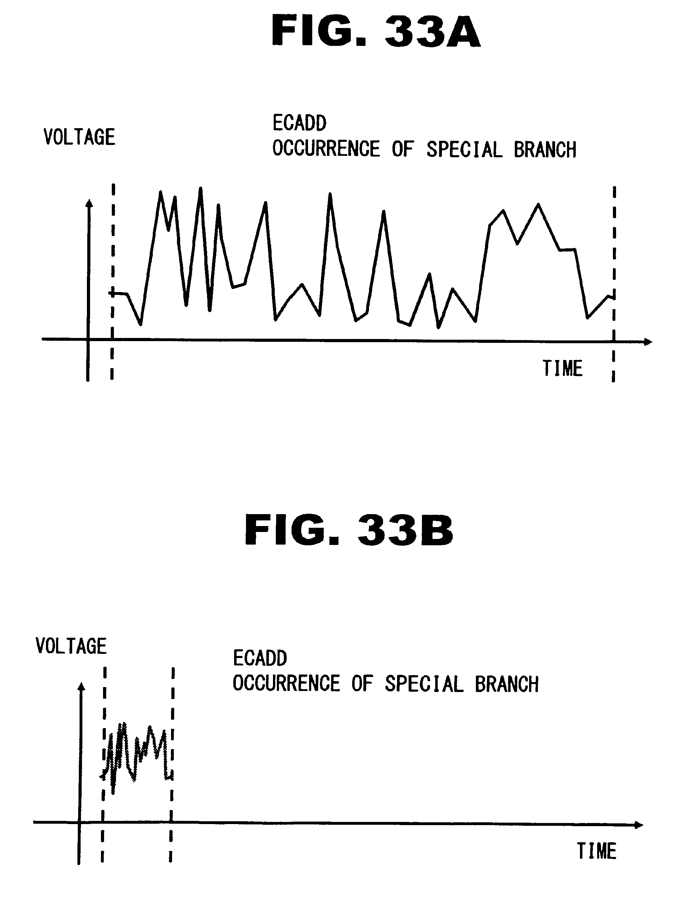

Fig. 33A and Fig. 33B illustrate the power waveform in the ECADD calculation involving the special branch and the power waveform in the ECADD calculation involving no special branch. As described above, since the special branch interrupts the ECDBL calculation, as illustrated in Fig. 33A and Fig. 33B, the power wavelength thereof becomes shorter than that in the ECDBL calculation involving no special branch.

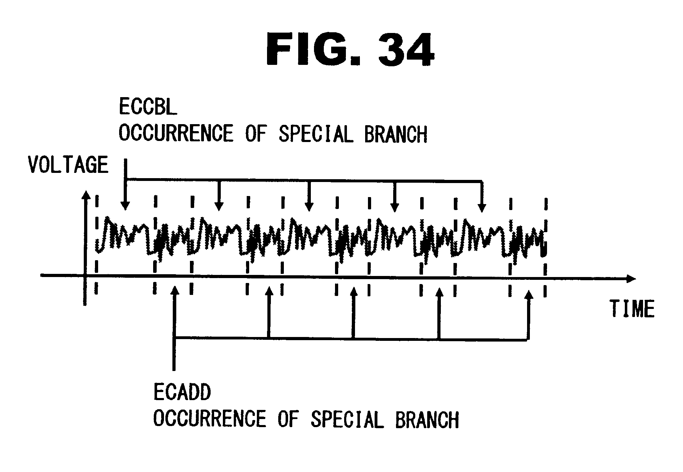

As described above, A = P is used as an input of point scalar multiplication, so a special branch is caused by the ECDBL calculation and the ECADD calculation. Hereinbelow, a power waveform of the entire point scalar multiplication with a special branch is explained. Fig. 34 illustrates a power waveform of the entire point scalar multiplication with the special branch.

As illustrated in Fig. 34, if A = P is used as an input of point scalar multiplication, a power waveform of the entire point scalar multiplication is such that a power waveform in the ECADD calculation with the special branch and a power waveform in the ECADD calculation with the special branch appear alternately. In the chosen message PA against the ECC based on the A&D method, processing corresponding to 1 x 1 and (-1) x (-1) in the chosen message PA against the RSA based on the A&D method is not performed. Hence, a pattern for identifying a bit value of a scalar value d does not appear in the power waveform, with the result that a private key may not be revealed.

However, a public key encoded in the ECC based on the A&D method can be revealed by chosen message PA different from the above chosen message PA (hereinafter referred to as special branch PA). The special branch PA is based on a unique analysis of the inventor of the subject application. Hereinbelow, the special branch PA is described.

The special branch PA uses A = Q as an input of scalar multiplication where Q represents a point satisfying the relation of 4Q = 0 and 2Q ≠ 0. If A = Q is input in the point scalar multiplication based on the A&D method illustrated in Fig. 25, the processing of the ECDBL calculation with the loop variable i is performed in accordance with a value of dᵢ₊₁. If dᵢ₊₁ == 0, ECDBL((2k)Q) is calculated with a predetermined integer k. In other words, if the ECDBL calculation is performed on the point of even multiple of Q, a calculation result is (4k)Q = 0. In addition, the special branch occurs to terminate the ECDBL calculation, with the result that V[0] = 0. On the other hand, if dᵢ₊₁ ==1, ECDBL((2k + 1)Q) is calculated with a predetermined integer k. In other words, if ECDBL is performed on the point of odd multiple of Q, a calculation result is (4k + 2)Q ( 0, no special branch occurs, and all ECDBL calculations are performed and completed. As a result, V[0] = (4k + 2)Q = 2Q.

Similar to the above ECDBL calculation, the ECADD calculation with the loop variable i is performed in accordance with a value of dᵢ₊₁. If dᵢ₊₁ == 0, a result of ECDBL calculation is V[0] = 0. Thus, ECADD(0, Q) is calculated. In this calculation, since one input of ECDBL is the point at infinity, the special branch occurs, and the processing is terminated. On the other hand, if dᵢ₊₁ == 1, the ECDBL calculation result is V[0] = 2Q. Thus, ECADD(2Q, Q) is calculated. In this calculation, both inputs of ECADD calculation are not the point at infinity, no special branch is involved, and all ECADD calculations are performed to terminate the processing.

As is apparent from the above, if a correspondence relationship between steps of ECDBL calculation and a bit value of dᵢ₊₁ is correct, a correspondence relationship between steps of ECADD calculation based on the ECDBL calculation result and a bit value of dᵢ₊₁ is correct. Hereinbelow, the correspondence relationship between the steps of ECDBL calculation and a bit value of dᵢ₊₁ is described.

As for the loop variable i, a value copied to V[0] through copying processing in 1408 illustrated in Fig. 25 (V[0] = V(dᵢ];) varies depending on a value of dᵢ. If dᵢ == 0, the ECDBL calculation result for V[0] in 1404 is a point of even multiple of Q, and 2kQ is copied to V[0]. On the other hand, if dᵢ == 1, the ECADD calculation result of V[1] in 1406 is a point +Q that is even multiple of Q, and (2k + 1)! Is copied to V[0]. As described above, a value of V[0] with dᵢ == 0 or dᵢ == 1 is used as an input of ECDBL(V[0]) calculation in the next loop, i.e., at the time when the loop variable is i-1. Hence, a correspondence relationship between steps of the ECDBL calculation and a bit value of dᵢ₊₁ is determined.

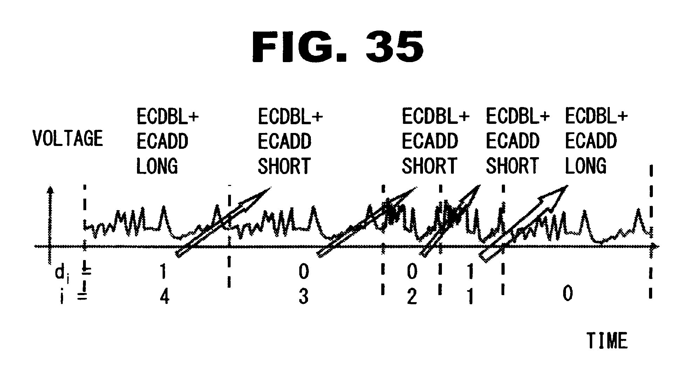

As understood from the above correspondence relationship, the following correspondence holds: if A = Q is used as an input of scalar multiplication, processing is terminated due to the special branch in both of the ECDBL calculation and the ECADD calculation in the case where dᵢ₊₁ == 0, while all calculations are performed to terminate the processing in both of the ECDBL calculation and the ECADD calculation in the case where dᵢ₊₁ ==1. In short, a value of dᵢ can be estimated from a power waveform based on the correspondence relationship. Fig. 35 illustrates the special branch PA against the ECC based on the A&D method.

As illustrated in Fig. 35, since a correspondence relationship holds between a value of dᵢ and a power waveform of the ECDBL calculation and the ECADD calculation in the next loop, a private key d can be decoded based on a power waveform of a device for performing point scalar multiplication with A = Q used as an input.

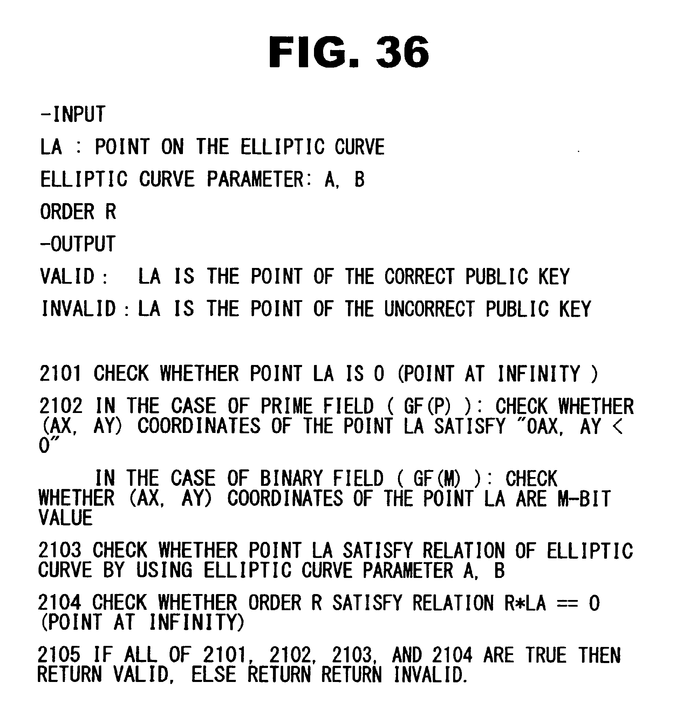

However, as a technique for preventing a private key from being revealed by the above special branch PA, public key validation (hereinafter referred to as PKV: public Key Validation) is known. For example, non-patent document of STANDARDS FOR EFFICIENT CRYPTOGRAPHY, SEC 1: Elliptic Curve Cryptography, http://www.secg.org/download/aid-385/secl_final.pdf discloses the PKV. According to the ECC using the PKV and the A&D method (hereinafter referred to as PKV method), a point Q satisfying a relation of 4Q = 0 and 2Q ≠ 0 is prevented from being used as an input of point scalar multiplication. Fig. 36 illustrates an algorithm of PKV processing.

The PKV is an algorithm for determining whether a target point A for scalar multiplication is a correct value applicable to cryptographic calculation based on a mathematical relationship. More specifically, as illustrated in Fig. 36, determination processing using the PKV is performed as pre-processing, and only a point A validated (regarded as valid) through this determination processing is input to the point scalar multiplication. Consider that the point scalar multiplication is performed on the point A validated by the PKV through n-fold multiplication. Provided that an order is r, it is known that, as long as a relation of d < r is satisfied, all calculations are always performed in both of the ECADD calculation and the ECDBL calculation. In other words, since the scalar value d in the encryption satisfies the relation of d < r all the time, no special branch is involved in the point scalar multiplication. As a result, the special branch PA against the PKV method becomes impossible.

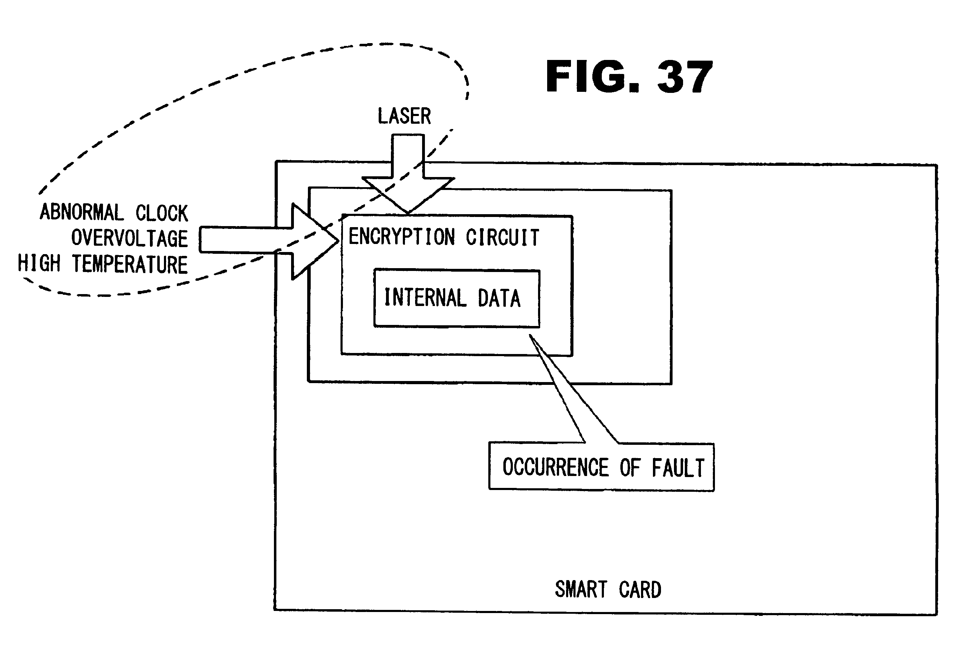

However, there is a problem that a private key can be revealed using an attack called Fault attack against the PKV method. Next, the Fault attack is described. Fig. 37 schematically illustrates the Fault attack.

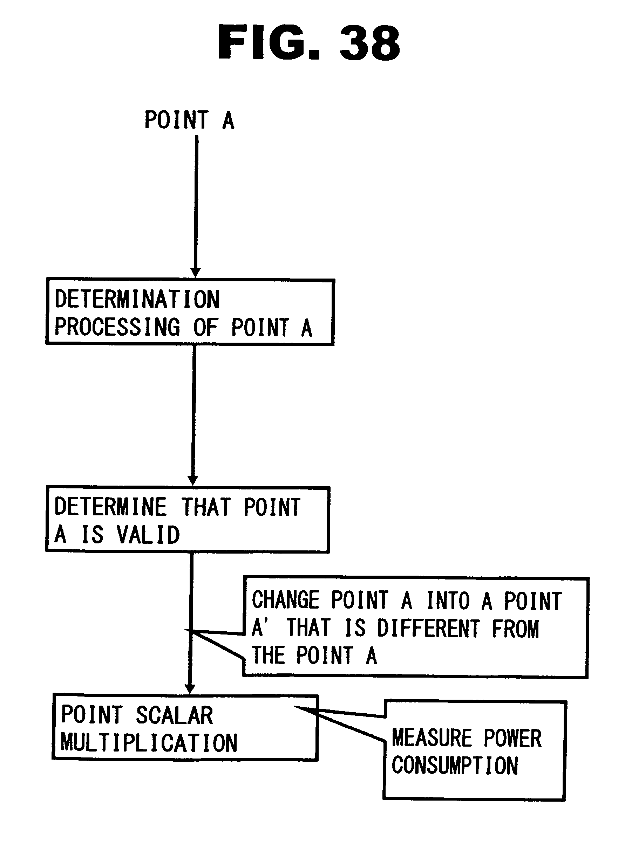

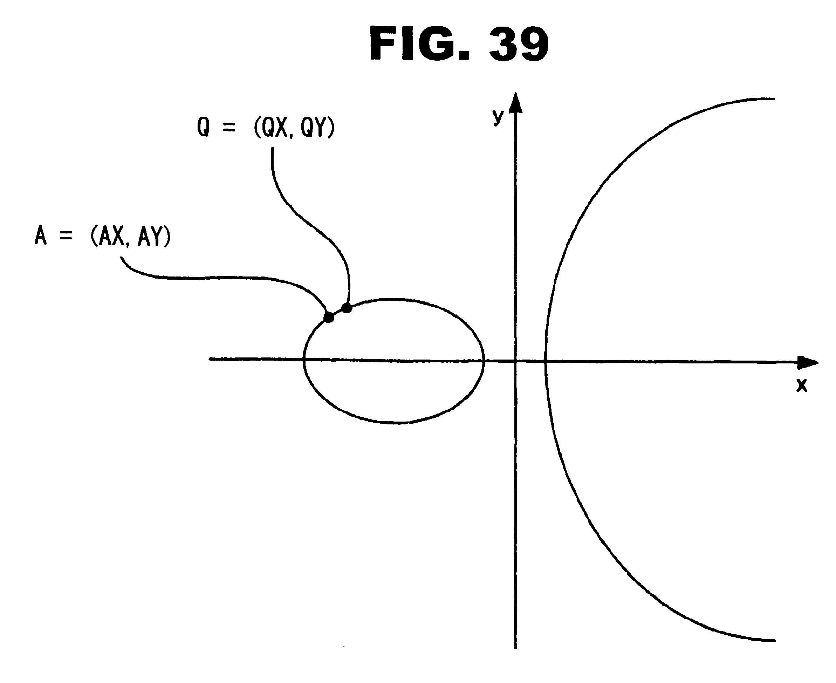

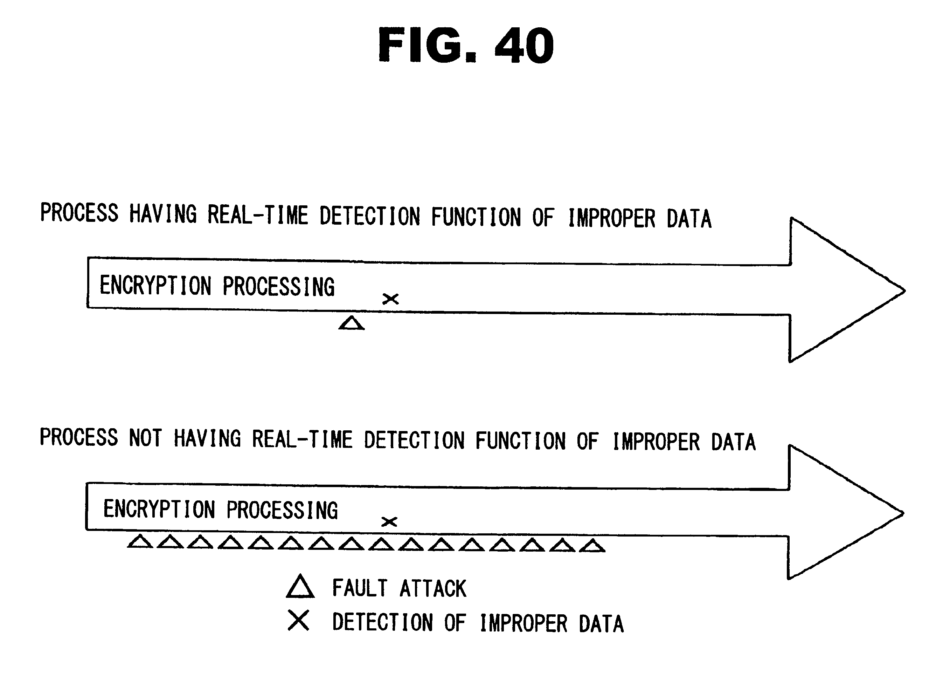

As illustrated in Fig. 37, in this Fault attack, an encryption circuit on a built-in device such as a smart card is applied with various types of stress (abnormal clock, overvoltage, and high temperature). The stress leads to an abnormal value of internal data of the encryption circuit. Confidential information in the encryption circuit is read based on the abnormal value. The Fault attack against the PKV method is described below. Fig. 38 schematically illustrates the Fault attack against the PKV method. Fig. 39 illustrates an example of a point A selected upon the Fault attack against the PKV method. Fig. 40 illustrates a real-time operation against the attack.

The Fault attack against the PKV method is to bring about abnormality in the encryption circuit to falsify a point A regarded as valid upon the above determination processing to a point A' that is different from the point A and satisfies the relation of A' = Q (4Q = 0, 2Q ≠0). The above special branch PA becomes possible due to the falsification. Here, a failure rate of the Fault attack is proportional to the number of bits falsified. By selecting an input value, the number of bits falsified can be reduced. A specific example of the Fault attack against the PKV method is described below. First, in the case of inputting a value with affine coordinates to a target encryption circuit for attack by an attacker, an attacker inputs a point A = (Aₓ, A_{y}) closest to Q = (Qₓ, Q_{y}) in the affine coordinate system illustrated in Fig. 39 is input. If the input point A is regarded as valid upon determination processing, the attacker applies stress to the encryption circuit to falsify coordinate data (Aₓ, A_{y}) of the point A to (Qₓ, Q_{y}). These points are close to each other in the affine coordinate system, so tampering can be performed only by changing several bits. In addition, similar tampering could be performed in the other coordinate system such as Jacobian. As described above, the PKV method is not safe against falsification of an input value after the determination processing. To elaborate, as illustrated in Fig. 40, such a method as does not detect improper data in real time may not be protected against any attack after detection and thus has the lower security level against any attack than a method having a real-time detection function.

### SUMMARY

Accordingly, it is an object in the invention to provide an elliptic curve arithmetic processing unit, an elliptic curve arithmetic processing program, and an elliptic curve arithmetic processing method, which can increase the safety level against any attack.

According to an aspect of the invention, an apparatus for executing cryptographic calculation on the basis of an elliptic point on an elliptic curve includes: a memory for storing a scalar value including a plurality of digits; and a processor for executing a process including: obtaining a second value representing a point on the elliptic curve; calculating an output point by repeating elliptic curve addition operation (ECADD) and elliptic curve doubling operation (ECDBL) with controlling the input data to ECADD and ECDBL in accordance with the input point and partial bit value of the scalar value to output an internal output value; determining whether at least one of the internal output values indicates a point of infinity; terminating the calculation when at least one of the internal output values indicates the point at infinity; and completing calculation when the internal output values do not indicate the point at infinity, so as to obtain a result of the cryptographic calculation.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

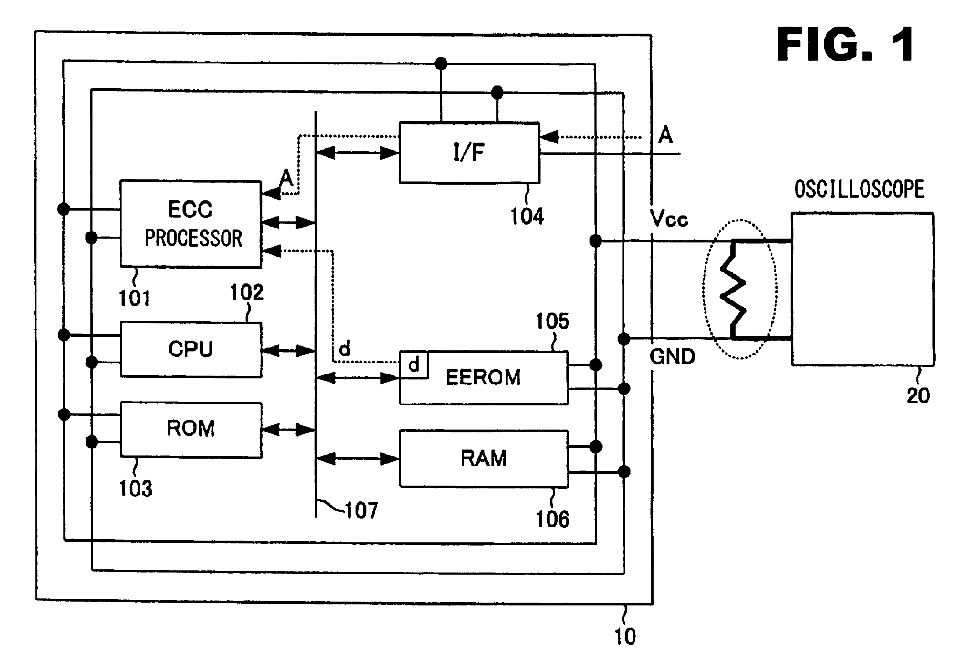

Fig. 1 illustrates the hardware configuration of an elliptic curve arithmetic processing unit according to a first embodiment of the present invention.

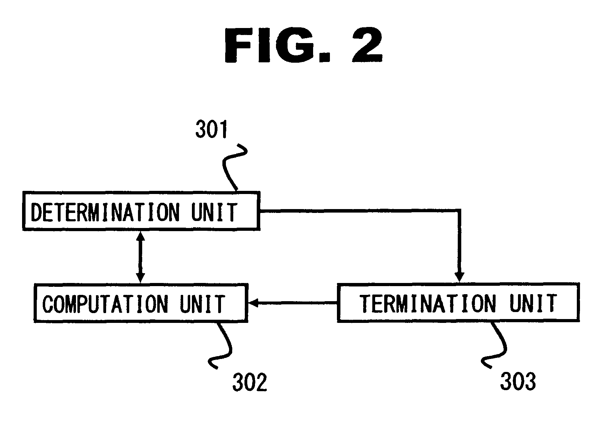

Fig. 2 is a block diagram of the functional configuration of an elliptic curve arithmetic processing unit according to the first embodiment.

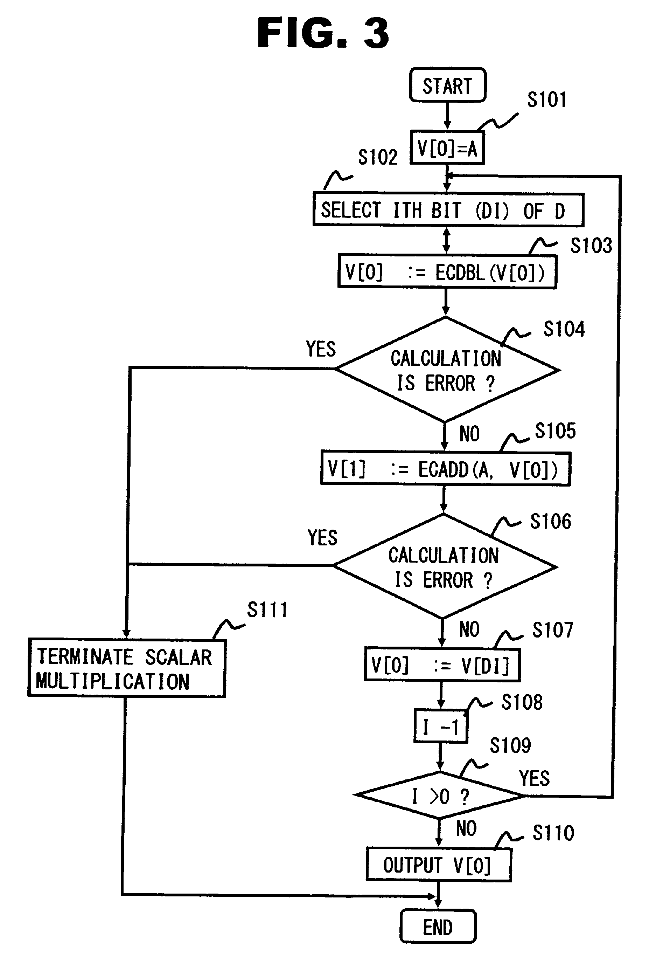

Fig. 3 is a flowchart of point scalar multiplication according to the first embodiment of the present invention.

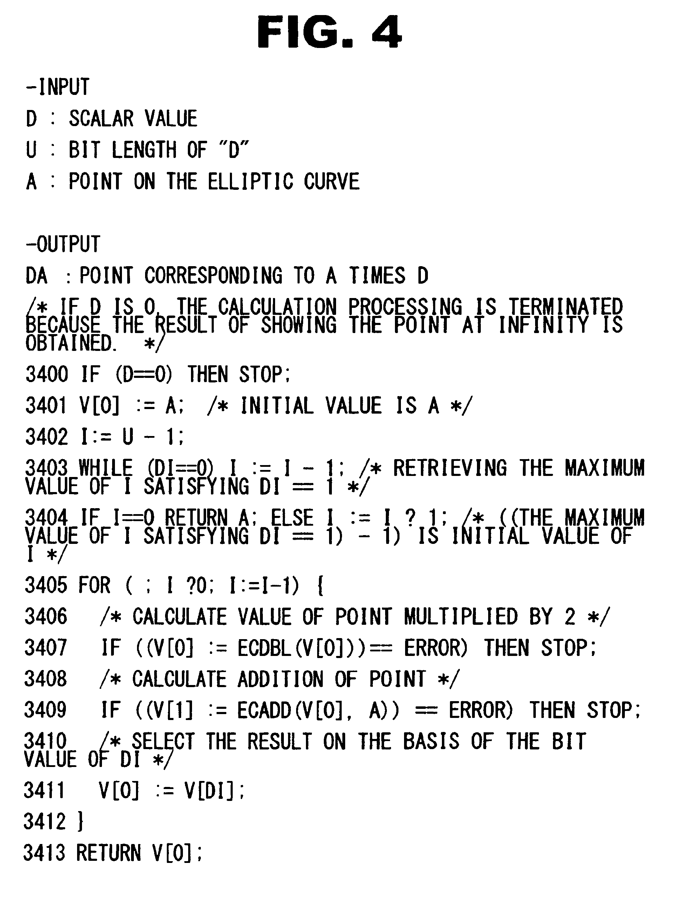

Fig. 4 illustrates an algorithm of point scalar multiplication with a prime field elliptic curve parameter.

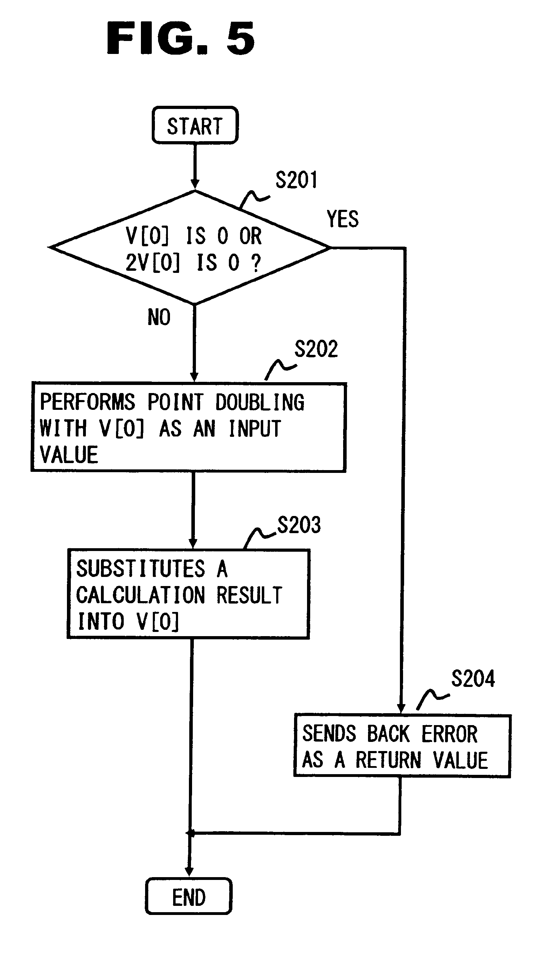

Fig. 5 is a flowchart illustrating an operation of ECDBL calculation processing.

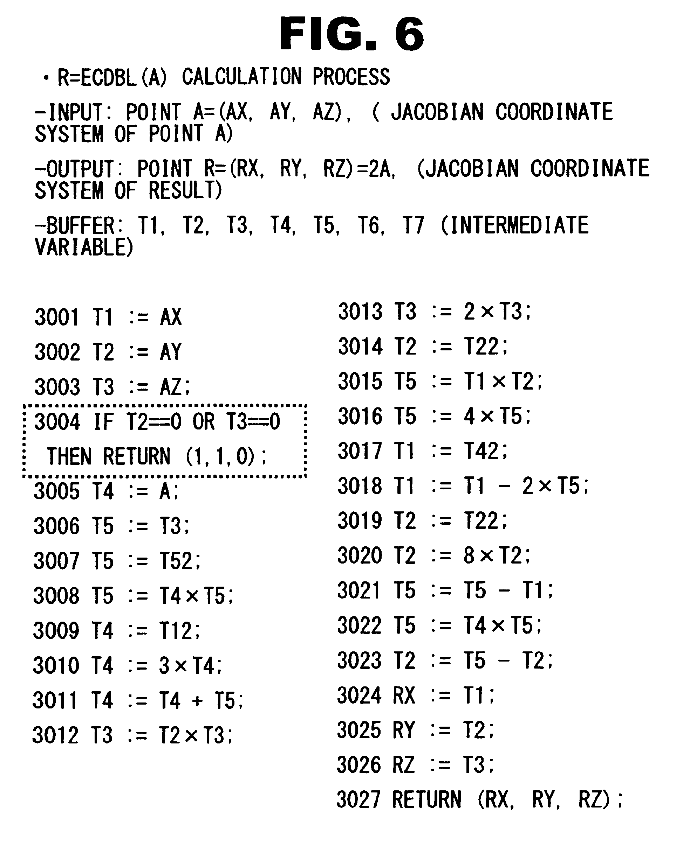

Fig. 6 illustrates an algorithm of ECDBL calculation processing using a prime field elliptic curve parameter.

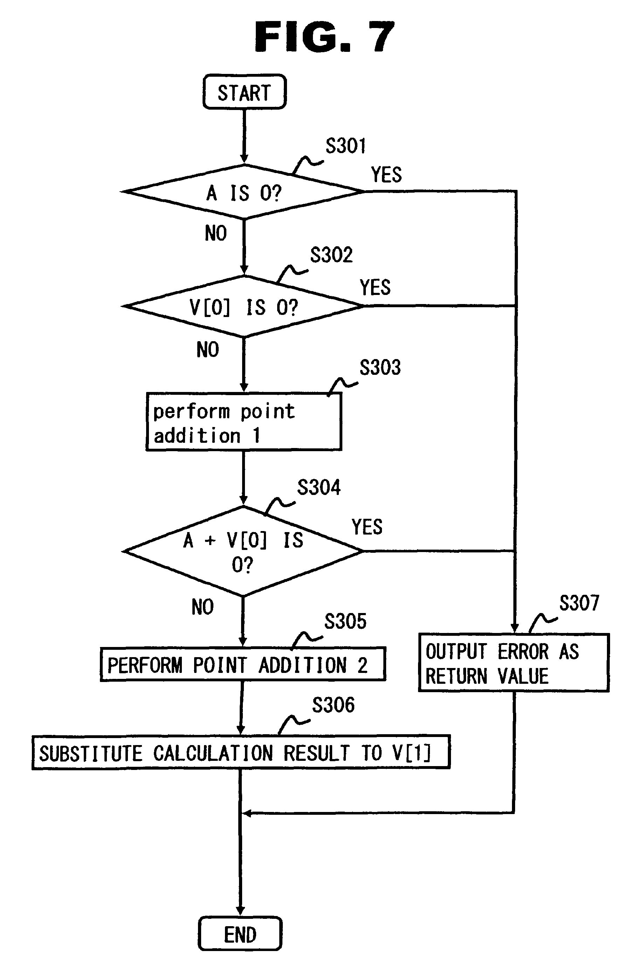

Fig. 7 is a flowchart illustrateing an operation of ECADD calculation processing.

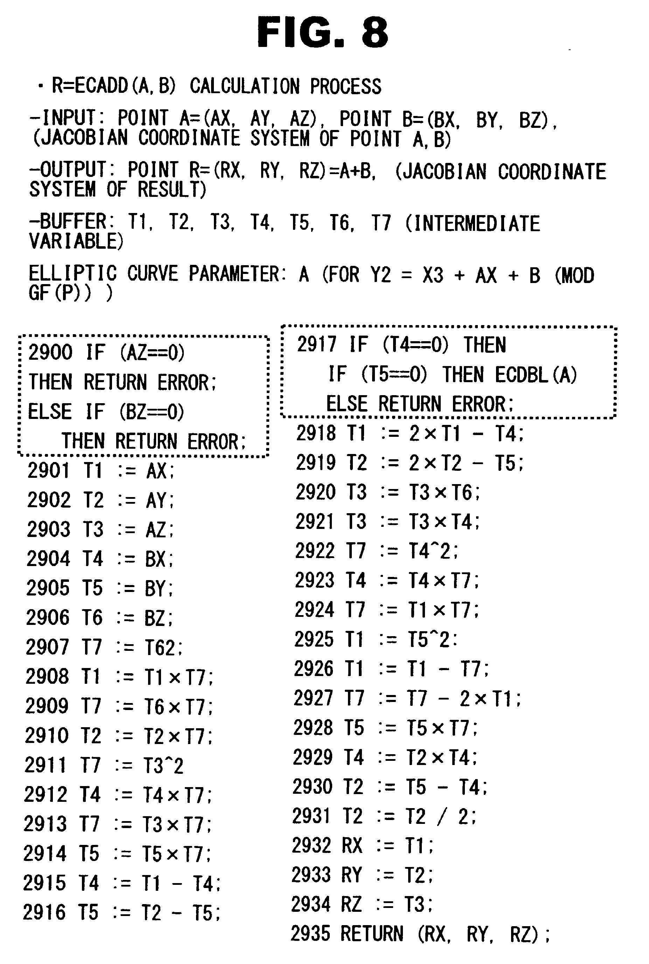

Fig. 8 illustrates an algorithm of ECADD calculation processing with a prime field elliptic curve parameter.

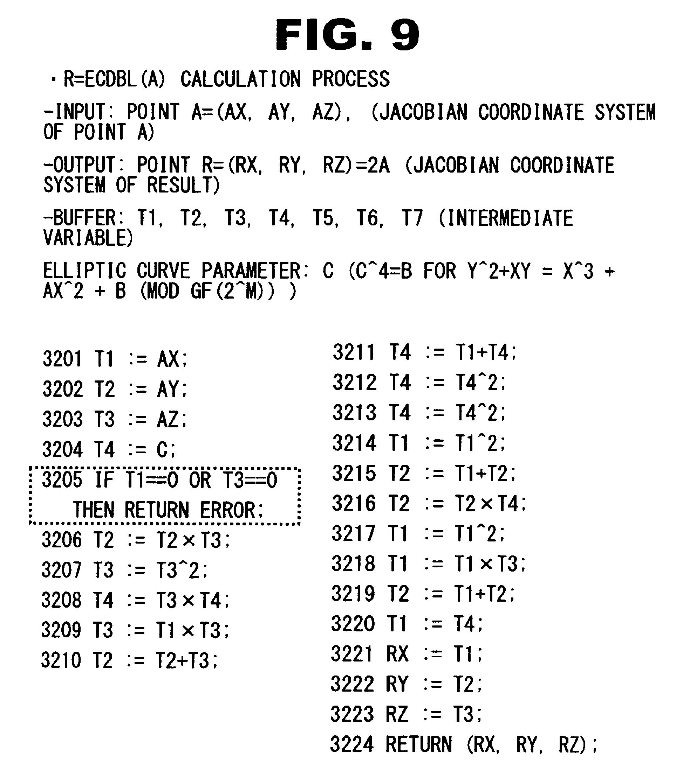

Fig. 9 illustrates an algorithm of ECDBL calculation with a square elliptic curve parameter.

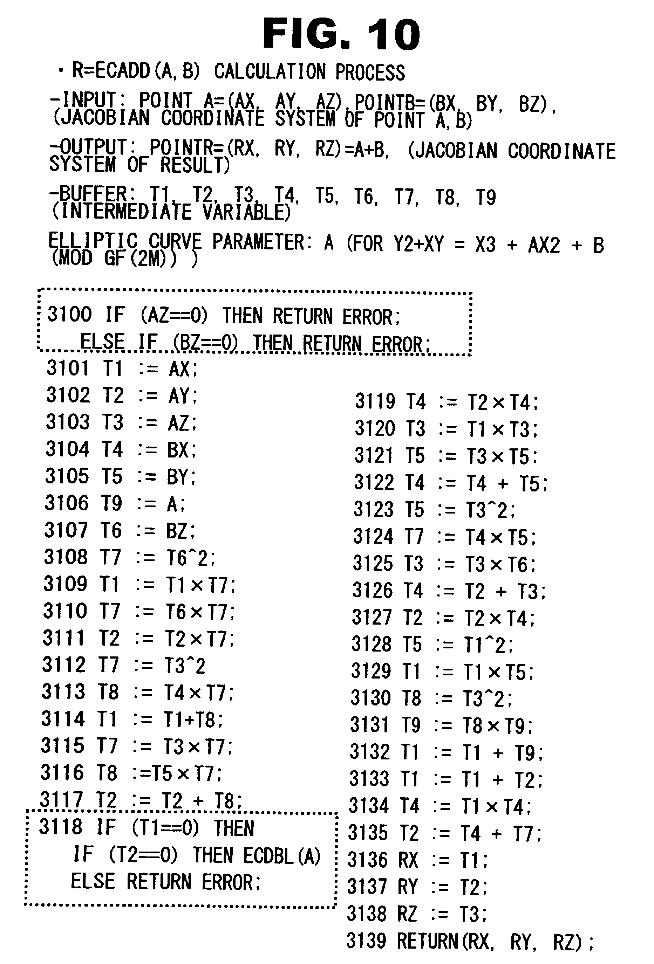

Fig. 10 illustrates an algorithm of ECADD calculation with a square elliptic curve parameter.

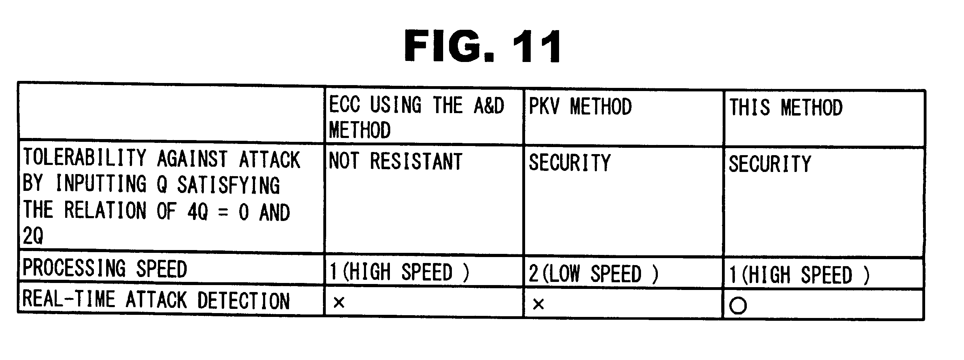

Fig. 11 illustrates a result of comparison between advantages of conventional methods and advantages of the present invention.

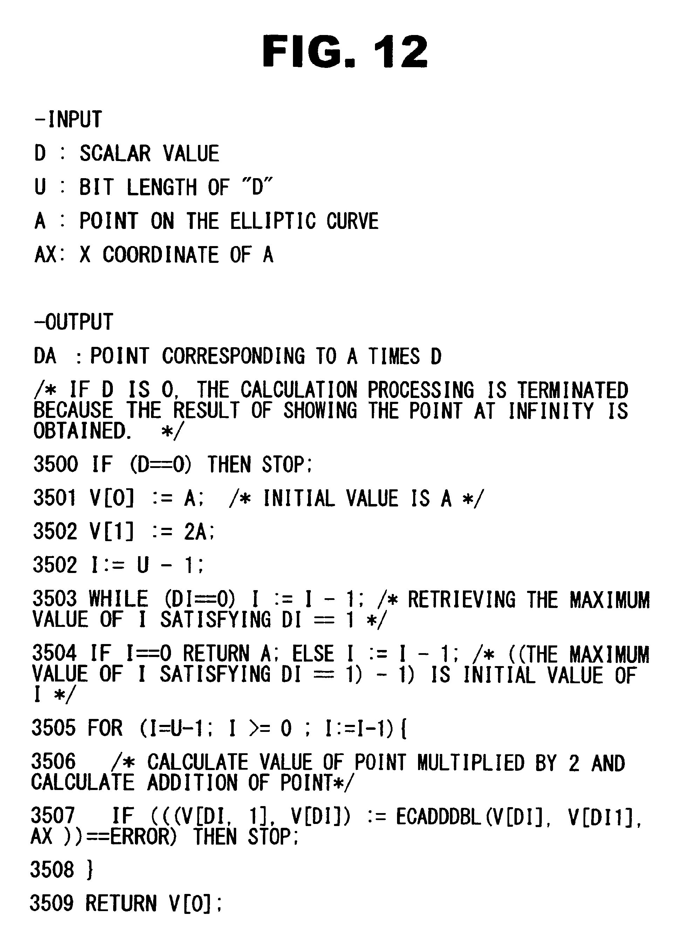

Fig. 12 illustrates an algorithm of point scalar multiplication according to a second embodiment of the present invention.

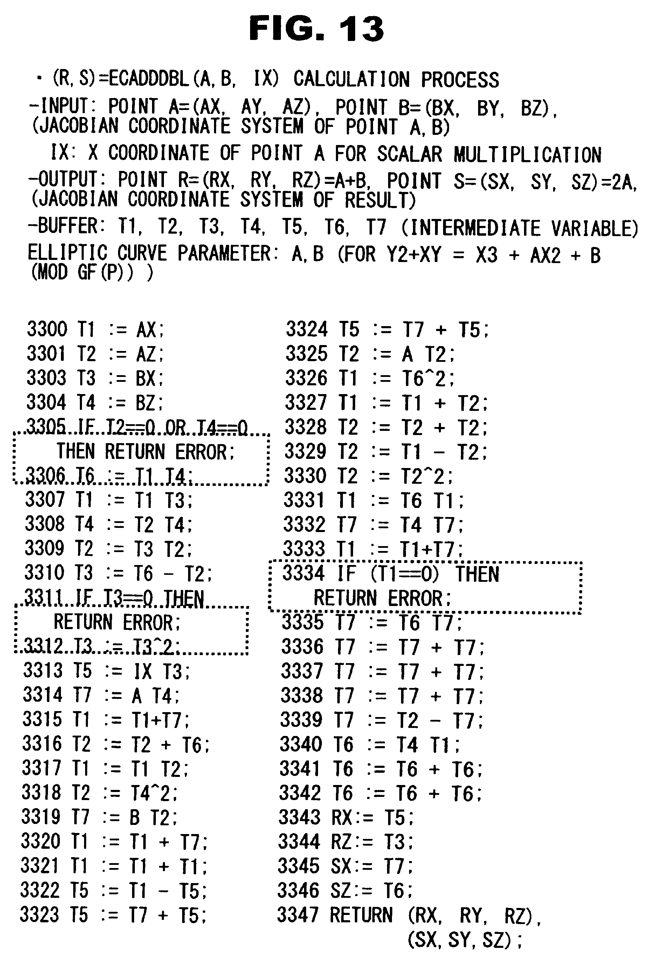

Fig. 13 illustrates an algorithm of ECADDDBL calculation according to the second embodiment.

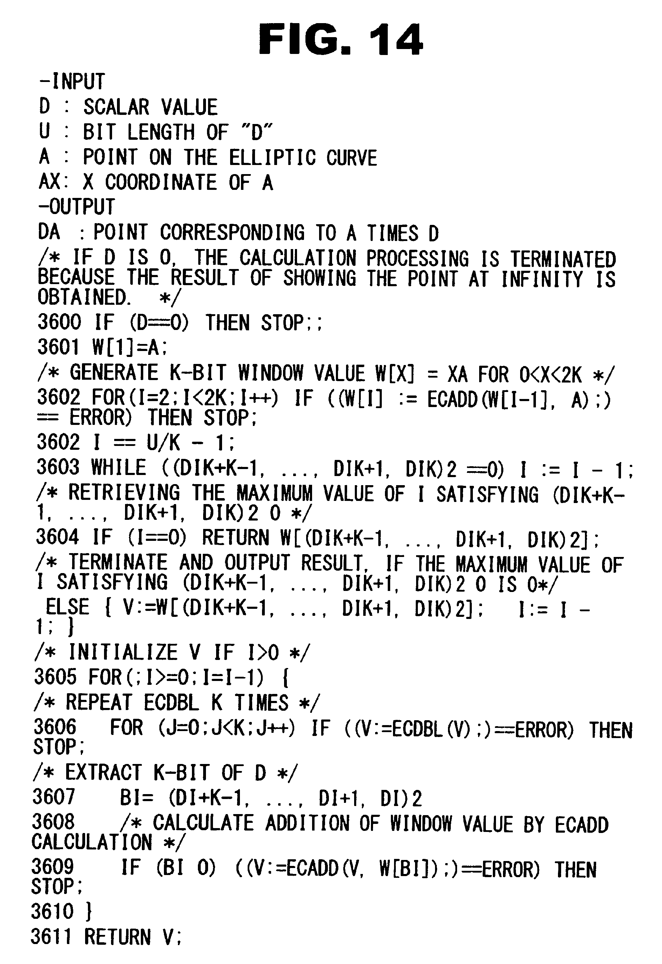

Fig. 14 illustrates an algorithm of point scalar multiplication according to a third embodiment of the present invention.
Fig. 15 schematically illustrates PA.
Fig. 16 illustrates a correspondence relationship between arithmetic calculation of RSA and arithmetic calculation of ECC.
Fig. 17 illustrates an algorithm of modulo exponentiation based on a binary method.
Fig. 18 schematically illustrates modulo exponentiation based on a binary method.
Fig. 19 schematically illustrates PA against modulo exponentiation based on a binary method.
Fig. 20 illustrates an algorithm of point scalar multiplication based on a binary method.
Fig. 21 schematically illustrates point scalar multiplication based on a binary method.
Fig. 22 schematically illustrates PA against point scalar multiplication based on a binary method.
Fig. 23 illustrates an algorithm of modulo exponentiation based on a binary method in accordance with an A&D method.
Fig. 24 schematically illustrates PA against modulo exponentiation based on a binary method in accordance with an A&D method.
Fig. 25 illustrates an algorithm of point scalar multiplication based on a binary method in accordance with an A&D method.
Fig. 26 schematically illustrates PA against point scalar multiplication based on a binary method in accordance with an A&D method.
Fig. 27 schematically illustrates chosen message PA against RSA.
Fig. 28 illustrates an algorithm of point addition of a prime field elliptic curve parameter.
Fig. 29 illustrates an algorithm of point doubling of a prime field elliptic curve parameter.
Fig. 30 illustrates an algorithm of point addition of a square elliptic curve parameter.
Fig. 31 illustrates an algorithm of point doubling of a square elliptic curve parameter.
Fig. 32A and Fig. 32B illustrate a power waveform in ECDBL calculation involving special branch and a power waveform in ECDBL calculation involving no special branch.
Fig. 33A and Fig. 33B illustrates a power waveform in ECADD calculation involving special branch and a power waveform in ECADD calculation involving no special branch.
Fig. 34 illustrates a power waveform of the entire point scalar multiplication with special branch.
Fig. 35 illustrates special branch PA against ECC based on an A&D method.
Fig. 36 illustrates an algorithm of PKV processing.
Fig. 37 schematically illustrates a Fault attack.
Fig. 38 schematically illustrates a Fault attack against a PKV method.
Fig. 39 illustrates an example of a point A selected upon a Fault attack against a PKV method.
Fig. 40 illustrates a real-time operation against any attack.

### DESCRIPTION OF EMBODIMENTS

Hereinafter, embodiments of the present invention will be described with reference to the drawings.

First Embodiment

To begin with, the hardware configuration of an elliptic curve arithmetic processing unit according to an embodiment of the present invention is described. Fig. 1 illustrates the hardware configuration of an elliptic curve arithmetic processing unit according to the embodiment of the present invention.

As illustrated in Fig. 1, an elliptic curve arithmetic processing unit 10 (apparatus) of this embodiment includes an ECC (Elliptic Curve Cryptosystem) processor 101, a CPU (Central Processing Unit) 102, a ROM (Read-Only Memory) 103, an I/F 104, an EEROM (Electrically Erasable ROM) 105, a RAM (Random Access Memory) 106, and a data bus 107 connecting these components with one another. Further, the elliptic curve arithmetic processing unit 10 includes an oscilloscope 20 for measuring power consumption, which is connected to Vcc and GND. The ECC processor 101 performs elliptic curve arithmetic processing related to encryption and electronic signature. Further, the CPU 102 controls the elliptic curve arithmetic processing unit 10. Further, the ROM 103 stores programs executed by the ECC processor 101 and the CPU 102. Further, the I/F 104 mediates data input/output to/from the elliptic curve arithmetic processing unit 10. Further, the EEROM 105 is a ROM that can electrically erase data, and stores a private key d. In addition, the RAM 106 temporarily stores programs executed by the ECC processor 101 and the CPU 102.

Next, the functional configuration of the elliptic curve arithmetic processing unit of this embodiment is described. Fig. 2 is a block diagram of the functional configuration of the elliptic curve arithmetic processing unit of this embodiment.

As illustrated in Fig. 2, the elliptic curve arithmetic processing unit 10 of this embodiment includes a determination unit 301, a computation unit 302 (calculation unit), and a termination unit 303 as functional units. The computation unit 302 performs calculation related to ECC. The determination unit 301 performs determination as to calculation of the calculation unit 302. Further, the termination unit 303 terminates the calculation of the calculation unit 302 based on the determination of the determination unit 301. Here, functions of each unit are realized by the ECC processor 101 and the CPU 102.

If an input value or output result is the point at infinity upon scalar multiplication of a point on the elliptic curve, the elliptic curve arithmetic processing unit 10 of this embodiment regards the input or output as attack and terminates the calculation processing. Hereinbelow, an operation of the elliptic curve arithmetic processing unit 10 of this embodiment is described. First, an operation of the entire point elliptic curve arithmetic processing unit 10 of this embodiment. Fig. 3 is a flowchart of point scalar multiplication of this embodiment. Fig. 4 illustrates an algorithm of point scalar multiplication with a prime field elliptic curve parameter. In the following description, A represents an input to the elliptic curve arithmetic processing unit 10 (predetermined point on the elliptic curve), d represents a scalar value (private key), i represents a bit position of d (the default is the highest-order bit position; considering u bits, i = u-2), dᵢ represents a value of ith bit, and dᵤ₋₁ = 1, 0 represents the point at infinity. The value d has a plurality of digits. Further, V[0] represents an array variable storing an input value and calculation result (output value), and V[1] represents an array variable storing a calculation result of the ECADD calculation. Further, a point on the elliptic curve is expressed by jacobian coordinates.

As illustrated in Fig. 3, the computation unit 302 substitutes A to V[0] as an initial value of V[0]. This is because, as described above, the calculation processing is terminated if an input value is the point at infinity upon point scalar multiplication. In other words, not the point at infinity but A is set as an initial value of V[0], making it possible to prevent the calculation processing from stopping due to an initial value 0.

Next, the computation unit 302 selects an ith bit (dᵢ) of d (S102), performs ECDBL calculation with an input value, V[0], and then substitutes a calculation result to V[0] (S103, calculation step). Next, the determination unit 301 determines whether a return value in the ECDBL calculation is ERROR (S104, determination step).

If the return value in the ECDBL calculation is not ERROR (S104, NO), the computation unit 302 performs ECADD calculation with A and v[0] as input values and then substitutes a calculation result to V[1] (S105, calculation step). Next, the determination unit 301 determines whether a return value in the ECADD calculation is ERROR (S106, determination step). The ECDBL calculation and the ECADD calculation are described later as ECDBL calculation processing and ECADD calculation processing.

If the return value in the ECADD calculation is not ERROR (S106, NO), the computation unit 302 substitutes V[dᵢ] into V[0] (S107, calculation step). In other words, a value to be substituted to V[0] is determined according to a bit value. Next, the computation unit 302 subtracts 1 from i (S108, calculation step) to determine whether i is 0 or more (S109, calculation step).

If i is smaller than 0 (S109, NO), the computation unit 302 outputs V[0] (S110, calculation step).

On the other hand, if i is 0 or more (S109, YES), the calculation unit 302 selects the ith bit (dᵢ) of d again (S102).

Further, if the return value in the ECADD calculation is ERROR in step S106 (S106, YES), the termination unit 303 terminates the scalar multiplication (S111, termination step).

Further, if the return value in the ECADD calculation is ERROR in step S104 (S104, YES), the termination unit 303 terminates the scalar multiplication (S111, termination step).

More specifically, the above processing corresponds to an algorithm illustrated in Fig. 4. According to the algorithm, initialization with V[0]: = 0 is not performed similar to the point scalar multiplication. Instead, in the processing in 3401, initialization with V[0]: = 0 is performed. Further, processing for maintaining calculation consistency is performed in 3402 to 3404 in parallel with the initialization with V[0]: = 0. This processing finds the maximum value of i satisfying dᵢ == 1, and i is decremented by 1. As a result, loop processing is started with the second-highest-order bit after the highest order bit with a bit value of 1. In addition, upon the loop processing in 3402 to 3404, if the return values in the ECDBL calculation and the ECADD calculation are ERROR, point scalar multiplication is terminated.

Next, the ECDBL calculation processing is explained. This ECDBL calculation processing corresponds to processing in step S103 in Fig. 3. Fig. 5 is a flowchart illustrating an operation of the ECDBL calculation processing. Fig. 6 illustrates an algorithm of the ECDBL calculation processing using a prime field elliptic curve parameter.

As illustrated in Fig. 5, first, the computation unit 302 determines whether V[0] = 0 or 2V[0] == 0 (S201).

If the relation of neither V[0] = 0 nor 2V[0] == 0 is satisfied (S201, NO), i.e., if an input value in the ECDBL calculation processing is not the point at infinity, the computation unit 302 performs point doubling with V[0] as an input value (S202), and then substitutes a calculation result into V[0] (S203).

On the other hand, if V[0] = 0 nor 2V[0] == 0 (S201, YES), the computation unit 302 sends back ERROR as a return value (S204).

In other words, the computation unit 302 outputs ERROR as a return value if an input value or output value in the ECDBL calculation processing is the point at infinity.

More specifically, the above processing corresponds to an algorithm illustrated in Fig. 6. In this algorithm, processing in 3004 corresponds to processing in steps S201 and S204. Further, in the processing in 3004, if T₂ == 0 or T₃ == 0, the processing corresponds to the aforementioned special branch 4, and then return Error; corresponds to exception processing accompanying the special branch 4.

Next, the ECADD calculation processing is described. The ECADD calculation processing corresponds to processing in step S104 illustrated in Fig. 3. Fig. 7 is a flowchart illustrating an operation of the ECADD calculation processing. Fig. 8 illustrates an algorithm of the ECADD calculation processing with a prime field elliptic curve parameter.

As illustrated in Fig. 7, the computation unit 302 first determines whether A == 0 (S301)_{.}

If a relation of A == 0 is not satisfied (S301, NO), the computation unit 302 determines whether V[0] = = 0 (S302).

If a relation of V[0] == 0 is not satisfied (S302, NO), the computation unit 302 performs point addition 1 (corresponding to processing in 2901 to 2916 in Fig. 8 (S303) to determine whether A + V[0] ==0 (S304).

If a relation of A + V[0] == 0 is not satisfied (S304, NO), the computation unit 302 performs point addition 2 (corresponding to processing in 2918 to 2935 in Fig. 8 (S305) and then substitutes a calculation result to V[1] (S306).

On the other hand, if A + V[0] == 0 (S304, YES), the computation unit 302 outputs ERROR as a return value (S307). As a result, if an input value or output value in the ECADD calculation processing is the point at infinity, point scalar multiplication is terminated.

Further, if V[0] == 0 in step S302 (S302, YES), the computation unit 302 outputs ERROR as a return value (S307).

Further, if A == 0 in step S301 (S301, YES), the computation unit 302 outputs ERROR as a return value (S307).

In other words, the computation unit 302 outputs ERROR as a return value if an input value or output value in the ECADD calculation processing is the point at infinity.

More specifically, the above processing corresponds to an algorithm illustrated in Fig. 8. In this algorithm, processing in 2900 corresponds to processing in steps S301, S302, and S307. Further, in the processing in 2900, if A_{z} == 0 or B_{z} == 0, the processing corresponds to the aforementioned special branch 1, and then return Error; corresponds to exception processing accompanying the special branch 1. Moreover, in the processing in 2917, if T₁ == 0 or T₂ == 0, the processing corresponds to the aforementioned special branch 3, and then return Error; corresponds to exception processing accompanying the special branch 3.

The algorithms illustrated in Figs. 6 and 8 are related to point scalar multiplication with a prime field elliptic curve parameter. However, the above processing is applicable to point scalar multiplication with a square elliptic curve parameter. Fig. 9 illustrates an algorithm of ECDBL calculation with a square elliptic curve parameter. Fig. 10 illustrates an algorithm of ECADD calculation with a square elliptic curve parameter.

The processing illustrated in Fig. 5 corresponds to processing using the square elliptic curve parameter, more specifically, an algorithm illustrated in Fig. 9. According to the algorithm, the processing in 3205 corresponds to processing in steps S201 and S204. Further, in the processing in 3205, if T₁ == 0 or T₃ == 0, the processing corresponds to the aforementioned special branch 4, and then return Error; corresponds to exception processing accompanying the special branch 4.

In addition, the processing illustrated in Fig. 7 corresponds to processing using the square elliptic curve parameter, more specifically, an algorithm illustrated in Fig. 10. According to the algorithm, the processing in 3100 corresponds to processing in steps S301, S302, and S307. Further, in the processing in 3100, if A_{z} == 0 or B_{z} == 0, the processing corresponds to the aforementioned special branch 1, and then return Error; corresponds to exception processing accompanying the special branch 1. Moreover, in the processing in 3118, if T₁ == 0 or T₃ == 0, the processing corresponds to the aforementioned special branch 3, and else return Error; corresponds to exception processing accompanying the special branch 3.

As described above, if the special branch (special branches 1, 3, and 4) occurs, i.e., an input value or output value is the point at infinity in either the ECDBL calculation or the ECADD calculation, ERROR is output. By outputting ERROR, not only the EDBDL calculation but point scalar multiplication as higher-level processing is totally terminated. As a result, a short power waveform and a long power waveform do not appear together upon measuring power consumption of the elliptic curve arithmetic processing unit 10, and only long power waveform is measured. This makes it possible to prevent an attack based on special branch PA utilizing a different in power waveform therebetween. In addition, since determination as to whether an attack is detected is similar to the determination in the ECADD calculation, an overhead of processing time to detect an attack can be eliminated. Moreover, in the point scalar multiplication, each time the ECDBL calculation and ECADD calculation, which are repeated with high frequency, are performed, an attack is detected. This enhances a real-time detection function. Moreover, if the real-time detection function is enhanced, it is possible to prevent an attack to falsify data at a predetermined timing like a Fault attack.

As understood from the above, the present invention is superior to conventional methods in security, processing time, a real-time attack detection function. Fig. 11 illustrates a result of comparison between advantages of the conventional methods and advantages of the present invention.

As illustrated in Fig. 11, although the ECC using the A&D method realizes a higher processing speed, the ECC is not resistant to an attack with an input of Q and may not detect an attack in real time. In addition, the PKV method is inferior in processing speed and may not detect an attack in real time albeit resistant to an attack with an input of Q. In contrast thereto, the present invention ensures security against an attack with an input of Q, high processing speed, and real-time attack detection. In short, according to the present invention, problems inherent to conventional ECC such as low resistance to an attack with an input of Q, low processing speed, and the lack of real-time detection function can be all solved.

Second Embodiment

The elliptic curve arithmetic processing unit 10 according to another embodiment of the present invention has the same hardware configuration as that of the first embodiment but differs from the first embodiment in that the ECDBL calculation and the ECADD calculation are performed at the same time (ECADDDBL calculation) upon point scalar multiplication. The ECADDDBL calculation uses a prime field elliptic curve parameter and jacobian coordinates. The following description is focused on differences from the first embodiment. Fig. 12 illustrates an algorithm of point scalar multiplication of this embodiment. Fig. 13 illustrates an algorithm of ECADDDBL calculation of this embodiment.

As illustrated in Fig. 12, the scalar multiplication of this embodiment differs from the first embodiment in that V[0]: = A; in 3501 and V[1]: = 2A; in 3502 are calculated for initialization. This is because the ECDBL calculation and the ECADD calculation are concurrently performed. Further, the multiplication differs from that in the first embodiment in that the whole point scalar multiplication is terminated in the case where the ECADDDBL calculation is performed in 3507, and ERROR is sent back as a return value as a result of the ECADDDBL calculation,.

Further, the ECADDDBL calculation performs ECDBL calculation and ECADD calculation without calculating y coordinates as illustrated in Fig. 13. Thus, calculation is not applied to y coordinate values R_{y}, S_{y} as an output result. Further, the point scalar multiplication algorithm is a so-called Montgomery-Ladder method. Further, an x coordinate Iₓ of a target point for scalar multiplication is used as an input for the ECADDDBL calculation.

Further, in the processing in 3305 according to the algorithm illustrated in Fig. 13, if T₂ == 0 or T₄ == 0, the processing corresponds to the aforementioned special branch 1, and then return Error; corresponds to exception processing accompanying the special branch 1. Moreover, in the processing in 3311, if T₃ == 0, the processing corresponds to the aforementioned special branch 3, and then return Error; corresponds to exception processing accompanying the special branch 3. Furthermore, in the processing in 3334, if T₁ == 0, the processing corresponds to the aforementioned special branch 4, and then return Error; corresponds to exception processing accompanying the special branch 4.

As described above, in the elliptic curve arithmetic processing unit 10 of this embodiment, similar to the first embodiment, if ERROR is sent back as a return value as a result of the ECADDDBL calculation, and the entire processing is terminated upon point scalar multiplication as a higher-level processing. Upon the point scalar multiplication, the ECADDDBL calculation processing is performed in place of the ECDBL calculation processing and the ECADD calculation processing to thereby reduce a table memory area and a calculation amount.

Third Embodiment

In the scalar multiplication of the first embodiment, the ECADD calculation is performed once each time the ECDBL calculation is performed. However, point scalar multiplication according to another embodiment of the present invention uses a window method to perform ECADD calculation once every k ECDBL calculations. Here, the number of ECDBL calculations in this embodiment and the number of ECDBL calculations in the first embodiment are the same. In other words, by applying the window method, a frequency of ECADD calculation is reduced. The following description is focused on different operations from the first embodiment. Fig. 14 illustrates an algorithm of point scalar multiplication of this embodiment.

As illustrated in Fig. 14, the point scalar multiplication using the window method generates pre-calculation table data in order to reduce the ECADD calculation frequency. The pre-calculation table data is generated upon processing in 3601 to 3602, and applied as W[x] = xA(0 < x < 2^{k}). In addition, upon the point scalar multiplication using the window method, the maximum value of i satisfying a relation of (dᵢₖ₊ₖ₋₁,..., dᵢₖ)ᵢ ( 0 is obtained, and initialization processing with V: = W[dᵢₖ₊ₖ₋₁,..., dᵢₖ)] (point other than the point at infinity) is performed in the processing in 3603 to 3605. Further, the loop processing in 3606 to 3611 is basically similar to a conventional window method but is different therefrom in that scalar multiplication is stopped if a return value in the ECADD calculation and the ECDBL calculation is ERROR.

As described above, by applying the window method to the point scalar multiplication of the first embodiment, the number of ECADD calculations is reduced, with the result that a calculation amount for the point scalar multiplication can be reduced.

Here, the ECADD calculation and the ECDBL calculation with jacobian coordinates are described above, but the processing for terminating the point scalar multiplication accompanying the special branch in each calculation is also applicable to the ECADD calculation and the ECDBL calculation with projection coordinates or affine coordinates. Further, in the above embodiments, if a return value in the ECADD calculation and the ECDBL calculation is ERROR, the point scalar multiplication is terminated. However, hardware resetting may be executed instead of terminating the processing. In addition, a flag indicating a detected attack may be set in a nonvolatile memory of the elliptic curve arithmetic processing unit 10 (for example, EEROM 105). By setting this flag, if a return value in the ECADD calculation and the ECDBL calculation is ERROR, the flag is set ON. If the flag is ON upon reboot following the hardware resetting, processing is performed to disable the device itself. The above algorithm of the point scalar multiplication is discussed for illustrative purposes, and the present invention is applicable to any algorithm of point scalar multiplication that does not perform initialization with the point at infinity. In other words, the initialization could be performed with any point other than the point at infinity.

Further, the elliptic curve arithmetic processing unit of this embodiment can be provided in the form of computer. Further, a program that prompts a computer that implements the elliptic curve arithmetic processing unit to perform the above steps may be provided as an elliptic curve arithmetic processing program. The above program can be stored in a computer-readable recording medium. Here, examples of the computer-readable recording medium include an internal storage device incorporated into a computer such as a ROM or a RAM, a portable storage medium such as a CD-ROM, a flexible disk, a DVD disk, a magneto-optical disk, and an IC card, a database storing computer programs, or the other computers or database thereof or a transmission medium on a line.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the scope of the invention.

## Claims

1. An apparatus for executing cryptographic calculation on the basis of an elliptic point on an elliptic curve comprising:
a memory for storing a scalar value including a plurality of digits; and
a processor for executing a process including:
obtaining a second value representing a point on the elliptic curve;
calculating an output point by repeating elliptic curve addition operation (ECADD) and elliptic curve doubling operation (ECDBL) by controlling the input data to ECADD and ECDBL in accordance with the input point and partial bit value of the scalar value to output an internal output value;
**characterised by**
determining whether at least one of the internal output values indicates a point of infinity;
terminating the calculation when at least one of the internal output values indicates the point at infinity; and
completing calculation when the internal output values do not indicate the point at infinity, so as to obtain a result of the cryptographic calculation.

2. The apparatus according to claim 1, wherein the second value representing a point on the elliptic curve is different from the point at infinity.

3. The apparatus according to claim 1, wherein the process further includes:
outputting error information when at least one of the internal output values indicates the point at infinity.

4. The apparatus according to claim 1, wherein the calculating calculates by using an Add-and-double-always method.

5. The apparatus according to claim 1, wherein the calculating calculates by using an ECADDDBL calculation that performs the ECDBL calculation and the ECADD calculation at the same time.

6. The apparatus according to claim 1, wherein the calculating calculates by using a window method.

7. A method for controlling an apparatus having a memory for storing a scalar value including a plurality of digits for executing cryptographic calculation on the basis of an elliptic point on an elliptic curve, the method comprising:
obtaining a second value representing a point on the elliptic curve;
calculating an output point by repeating elliptic curve addition operation (ECADD) and elliptic curve doubling operation (ECDBL) by controlling the input data to ECADD and ECDBL in accordance with the input point and partial bit value of the scalar value to output an internal output value;
determining whether at least one of the internal output values indicates a point of infinity;
terminating the calculation when at least one of the internal output values indicates the point at infinity; and
completing calculation when the internal output values do not indicate the point at infinity, so as to obtain a result of the cryptographic calculation.

8. The method according to claim 7, wherein the second value representing a point on the elliptic curve is different from the point at infinity.

9. The method according to claim 7, further comprising, outputting error information when the at least one of the internal output values indicates the point at infinity.

10. The method according to claim 7, wherein the calculating calculates by using an Add-and-double-always method.

11. The method according to claim 7, wherein the calculating calculates by using an ECADDDBL calculation that performs the ECDBL calculation and the ECADD calculation at the same time.

12. The method according to claim 7, wherein the calculating calculates by using a window method.

13. A computer readable medium storing a program for controlling an apparatus for executing cryptographic calculation on the basis of an elliptic point on an elliptic curve, the apparatus including a memory for storing a first value including a plurality of digits and a processor for executing a process, the process comprising all the steps of claim 7.

## Patentansprüche

1. Vorrichtung zum Ausführen einer kryptographischen Berechnung auf der Basis eines elliptischen Punktes auf einer elliptischen Kurve, umfassend:
einen Speicher zum Speichern eines Skalarwertes, der eine Vielzahl von Stellen enthält; und
einen Prozessor zum Ausführen eines Prozesses, der enthält:
Erhalten eines zweiten Wertes, der einen Punkt auf der elliptischen Kurve darstellt;
Berechnen eines Ausgabepunktes durch Wiederholen einer Additionsoperation auf der elliptischen Kurve (ECADD) und einer verdopplungsoperation auf der elliptischen Kurve (ECDBL) durch Steuern der Eingabedaten für ECADD und ECDBL gemäß dem Eingabepunkt und partiellen Bitwert des Skalarwertes, um einen internen Ausgabewert auszugeben;
**gekennzeichnet durch**:
Bestimmen, ob wenigstens einer der internen Ausgabewerte einen Unendlichkeitspunkt angibt;
Beenden der Berechnung, wenn wenigstes einer der internen Ausgabewerte den Punkt im Unendlichen angibt; und
Vollenden der Berechnung, wenn die internen Ausgabewerte nicht den Punkt im Unendlichen angeben, um ein Resultat der kryptographischen Berechnung zu erhalten.

2. Vorrichtung nach Anspruch 1, bei der der zweite Wert, der einen Punkt auf der elliptischen Kurve darstellt, sich von dem Punkt im Unendlichen unterscheidet.

3. Vorrichtung nach Anspruch 1, bei der der Prozess ferner enthält:
Ausgeben von Fehlerinformationen, wenn wenigstens einer der internen Ausgabewerte den Punkt im Unendlichen angibt.

4. Vorrichtung nach Anspruch 1, bei der das Berechnen unter Einsatz einer Add-and-double-always-Methode erfolgt.

5. Vorrichtung nach Anspruch 1, bei der das Berechnen unter Einsatz einer ECADDDBL-Berechnung erfolgt, bei der die ECDBL-Berechnung und die ECADD-Berechnung gleichzeitig ausgeführt werden.

6. Vorrichtung nach Anspruch 1, bei der das Berechnen unter Einsatz einer Fenstermethode erfolgt.

7. Vorfahren zum Steuern einer Vorrichtung, die einen Speicher zum Speichern eines Skalarwertes hat, der eine Vielzahl von Stellen enthält zum Ausführen einer kryptogruphischen Berechnung auf der Basis eines elliptischen Punktes auf einer elliptischen Kurve, weiches Verfahren umfasst:
Erhalten eines zweiten Wertes, der einen Punkt auf der elliptischen Kurve darstellt;
Berechnen eines Ausgabepunktes durch Wiederholen einer Additionsoperation auf der elliptischen Kurve (ECADD) und einer Verdopplungsopcration auf der elliptischen Kurve (ECDBL) durch Steuern der Eingabedaten für ECADD und ECDBL gemäß dem Eingabepunkt und partiellen Bitwert des Skalarwertes, um einen internen Ausgabewert auszugeben;
Bestimmen, ob wenigstens einer der internen Ausgabewerte einen Unendlichkeitspunkt angibt;
Beenden der Berechnung, wenn wenigstes einer der interncn Ausgabewerte den Punkt im Unendlichen angibt; und
Vollenden der Berechnung, wenn die internen Ausgabewerte nicht den Punkt im Unendlichen angeben, um ein Resultat der kryptographischen Berechnung zu erhalten.

8. Verfahren nach Anspruch 7, bei dem der zweite Wert, der einen Punkt auf der elliptischen Kurve, darstellt, sich von dem Punkt im Unendlichen unterscheidet.

9. Verfahren nach Anspruch 7, ferner mit dem Ausgeben von Fehlerinformationen, wenn der wenigstens eine der internen Ausgabewerte den Punkt im Unendlichen angibt.

10. Verfahren nach Anspruch 7, bei dem das Berechnen unter Einsatz einer Add-and-double-always-Methode erfolgt.

11. Verfahren nach Anspruch /, bei dem das Berechnen unter Einsatz einer ECADDDBL-Berechnung erfolgt, bei der die ECDBL-Berechmung und die ECADD-Berechnung gleichzeitig ausgeführt werden.

12. Verfahren nach Anspruch 7, bei dem das Berechnen unter Einsatz einer Fenstermethode erfolgt.

13. Computerlesbares Medium, das ein Programm speichert, zum Steuern einer Vorrichtung zum Ausführen einer kryptographischen Berechnung auf der Basis eines elliptischen Punktes auf einer elliptischen Kurve, welche Vorrichtung einen Speicher zum Speichern eines ersten Wertes enthält, der eine Vielzahl von Stellen enthält, und einen Prozessor zum Ausführen eines Prozesses, welcher Prozess alle Schritte nach Anspruch 7 umfasst.

## Revendications

1. Appareil pour exécuter un calcul cryptographique sur la base d'un point elliptique sur une courbe elliptique comprenant :
une mémoire pour mémoriser une valeur scalaire comprenant une pluralité de chiffres ; et
un processeur pour exécuter un processus consistant à :
obtenir une deuxième valeur représentant un point sur la courbe elliptique ;
calculer un point de sortie en répétant une opération d'addition de courbe elliptique (ECADD) et une opération de doublement de courbe elliptique (ECDBL) en commandant les données d'entrée pour les opérations ECADD et ECDBL conformément au point d'entrée et à la valeur de bit partielle de la valeur scalaire pour délivrer une valeur de sortie interne ;
**caractérisé par** les étapes consistant à
déterminer si au moins l'une des valeurs de sortie internes indique un point à l'infini ;
terminer le calcul lorsqu'au moins l'une des valeurs de sortie internes indique le point à l'infini ; et
achever le calcul lorsque les valeurs de sortie internes n'indiquent pas le point à l'infini, de manière à obtenir un résultat du calcul cryptographique.

2. Appareil selon la revendication 1, dans lequel la deuxième valeur représentant un point sur la courbe elliptique est différente du point à l'infini.

3. Appareil selon la revendication 1, dans lequel le processus consiste en outre à délivrer des informations d'erreur lorsqu'au moins l'une des valeurs de sortie internes indique le point à l'infini.

4. Appareil selon la revendication 1, dans lequel le calcul calcule en utilisant un procédé « ajouter et doubler toujours ».

5. Appareil selon la revendication 1, dans lequel le calcul calcule en utilisant un calcul ECADDDBL qui effectue le calcul ECDBL et le calcul ECADD simultanément.

6. Appareil selon la revendication 1, dans lequel le calcul calcule en utilisant un procédé à fenêtre.

7. Procédé pour commander un appareil comportant une mémoire pour mémoriser une valeur scalaire comprenant une pluralité de chiffres pour exécuter un calcul cryptographique sur la base d'un point elliptique sur une courbe elliptique, le procédé consistant à :
obtenir une deuxième valeur représentant un point sur la courbe elliptique ;
calculer un point de sortie en répétant une opération d'addition de courbe elliptique (ECADD) et une opération de doublement de courbe elliptique (ECDBL) en commandant les données d'entrée pour les opérations ECADD et ECDBL conformément au point d'entrée et à la valeur de bit partielle de la valeur scalaire pour délivrer une valeur de sortie interne ;
déterminer si au moins l'une des valeurs de sortie internes indique un point à l'infini ;
terminer le calcul lorsqu'au moins l'une des valeurs de sortie internes indique le point à l'infini ; et
achever le calcul lorsque les valeurs de sortie internes n'indiquent pas le point à l'infini, de manière à obtenir un résultat du calcul cryptographique.

8. Procédé selon la revendication 7, dans lequel la deuxième valeur représentant un point sur la courbe elliptique est différente du point à l'infini.

9. Procédé selon la revendication 7, consistant en outre à délivrer des informations d'erreur lorsqu'au moins l'une des valeurs de sortie internes indique le point à l'infini.

10. Procédé selon la revendication 7, dans lequel le calcul calcule en utilisant un procédé « ajouter et doubler toujours ».

11. Procédé selon la revendication 7, dans lequel le calcul calcule en utilisant un calcul ECADDDBL qui effectue le calcul ECDBL et le calcul ECADD simultanément.

12. Procédé selon la revendication 7, dans lequel le calcul calcule en utilisant un procédé à fenêtre.

13. Support pouvant être lu par un ordinateur mémorisant un programme pour commander un appareil pour exécuter un calcul cryptographique sur la base d'un point elliptique sur une courbe elliptique, l'appareil comprenant une mémoire pour mémoriser une première valeur comprenant une pluralité de chiffres et un processeur pour exécuter un processus, le processus comprenant toutes les étapes de la revendication 7.
